(19) Europäisches Patentamt
European Patent Office
Office européen des brevets

(11) Veröffentlichungsnummer : **0 034 725**
**B1**

(12) # EUROPÄISCHE PATENTSCHRIFT

(45) Veröffentlichungstag der Patentschrift : **25.07.84**

(51) Int. Cl.³ : **C 09 B 69/00**, D 06 P 1/02, D 06 P 1/41, D 21 H 3/80

(21) Anmeldenummer : **81100672.5**

(22) Anmeldetag : **30.01.81**

(54) **Imidazolylmethylgruppen enthaltende Farbstoffe und deren Verwendung.**

(30) Priorität : **18.02.80 DE 3006013**
**26.11.80 DE 3044563**

(43) Veröffentlichungstag der Anmeldung : **02.09.81 Patentblatt 81/35**

(45) Bekanntmachung des Hinweises auf die Patenterteilung : **25.07.84 Patentblatt 84/30**

(84) Benannte Vertragsstaaten :
**BE CH DE FR GB IT LI**

(56) Entgegenhaltungen :
**DE-A- 2 046 785**
**DE-A- 2 508 884**
**FR-A- 1 323 153**
**FR-A- 1 567 970**
**Die Akte enthält technische Angaben, die nach dem Eingang der Anmeldung eingereicht wurden und die nicht in dieser Patentschrift enthalten sind.**

(73) Patentinhaber : **BASF Aktiengesellschaft**
**Carl-Bosch-Strasse 38**
**D-6700 Ludwigshafen (DE)**

(72) Erfinder : **Patsch, Manfred, Dr.**
**Fritz-Wendel-Strasse 4**
**D-6706 Wachenheim (DE)**
Erfinder : **Ruske, Manfred**
**Merziger Strasse 10**
**D-6700 Ludwigshafen (DE)**

**EP 0 034 725 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft neue Imidazolylmethylengruppen enthaltende Farbstoffe und deren Verwendung.

Die neuen Farbstoffe haben die allgemeine Formel I

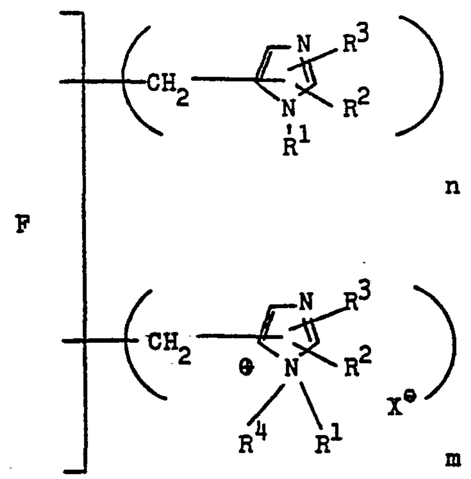

(I)

in der

$R^1$ Wasserstoff, $C_1$- bis $C_6$-Alkyl oder $C_2$- bis $C_6$-Alkenyl,

$R^2$ und $R^3$ unabhängig voneinander Wasserstoff, $C_1$- bis $C_5$-Alkyl oder $C_2$- bis $C_5$-Alkenyl,

$R^4$ $C_1$- bis $C_{12}$-Alkyl oder Hydroxy-$C_2$- bis $C_4$-alkyl,

$X^\ominus$ ein Äquivalent eines Anions,

F ein (m + n)-wertiger Rest eines Monoazofarbstoffs, eines Disazofarbstoffs, eines Polyazofarbstoffs, eines Chinophthalons, eines Bisdioxazins, einer Verbindung der 5,6-Arylo-2-pyronreihe, eines Naphtholactam-farbstoffs, eines Triphenylmethanfarbstoffs eines Xanthenfarbstoffs, eines Phthalocyanins, eines Indigoids, eines mindestens eine Phenylgruppe enthaltenden Anthrachinonfarbstoffs, eines höher anellierten Carbonylfarbstoffs, eines Chinacridons, eines Perylen-3,4,9,10-tetracarbonsäurediimids, eines Anthrapyrimidins, eines Pyrazoloanthrons, eines Diaminonaphthochinons, eines Naphthazerins oder eines Naphthalin-1,4,5,8-tetracarbonsäurediimids,

m 0 bis 5 und

n 0 bis 5 bedeuten, wobei $1 \leq (m + n) \leq 5$ ist.

Die neuen Verbindungen der Formel (I) sind in Form ihrer Salze in Wasser, bzw. in Form der Basen in verdünnter Säure, wie Essigsäure, Hydroxyessigsäure, Propionsäure, Milchsäure oder Methansulfonsäure leicht löslich.

Als Salze kommen z. B. Zinkdoppelsalze, die Benzol- oder $C_1$- bis $C_{20}$-Alkylbenzolsulfonate, die Methylsulfate, die Ethylsulfate, die Chloride und Sulfate in Betracht.

Die als quartäre Ammoniumsalze vorliegenden Verbindungen der Formel (I) sind in Wasser leicht bis gut löslich.

Die Farbstoffe eignen sich als kationische Farbstoffe zum Färben von Cellulosefasermaterialien, insbesondere zum Färben von Papier in der Masse. Das mit den neuen Farbstoffen gefärbte Papier weist eine hohe Ausblutechtheit auf. Andererseits können Färbungen, z. B. mit Farbstoffen, in denen F ein Phthalocyaninrest ist, mit Chlorlauge entfärbt werden, was bei der Aufarbeitung von Papierabfällen von Vorteil ist. Bei der Herstellung von gefärbtem Papier fallen bei Anwendung der erfindungsgemäßen Farbstoffe ungefärbte bis praktisch ungefärbte Abwässer an.

In der FR-A 1 567 970 werden Azofarbstoffe beschrieben, die an der Kupplungskomponente einen über eine $C_2$- oder $C_3$-Alkylenbrücke gebundenen Imidazolrest tragen und worin die Alkylenbrücke auf der einen Seite an ein N-Atom des Imidazolrings und auf der anderen Seite an die Aminogruppe des Farbstoffs gebunden ist.

Aus der FR-A 1 323 153 sind Farbstoffe bekannt, die über ein Brückenglied einen Imidazolrest tragen. Das Brückenglied, das ein Carbonylalkylenrest ist, ist auf der einen Seite an ein N-Atom des Imidazolrings und auf der anderen Seite über die $-\overset{O}{\overset{\|}{C}}$-Gruppe an eine Aminogruppe des Farbstoffs gebunden.

Aus der DE-A 2 046 785 sind Azofarbstoffe bekannt, die einen über eine gegebenenfalls substituierte Methylenbrücke an den Farbstoffrest gebundenen Dihydroimidazolring tragen. Die Methylengruppe ist auf der einen Seite an das C-Atom in der 2-Stellung des Imidazolrings und auf der anderen Seite an die Aminogruppe des Farbstoffs gebunden.

Von diesem Stand der Technik unterscheiden sich die erfindungsgemäßen Farbstoffe (I) dadurch, daß die Methylengruppe, die den Imidazolring mit dem Farbstoff verbindet, auf der einen Seite an ein C-Atom des Imidazolrings und auf der anderen Seite an ein C-Atom eines aromatischen Ringes im Farbstoff gebunden ist.

Gegenüber dem aus der FR-A 1 567 970, Beispiel 1 bekannten Farbstoff sind die Farbstoffe gemäß der Erfindung in den Ausblutechtheiten gegenüber Kondenswasser und 0,5 gew.%iger Sodalösung und ein Teil der Farbstoffe auch im Fixiervermögen bei der Massefärbung von Papier überlegen.

Die aus der FR-A 1 323 153, Beispiel 9 (in Verbindung mit der Tabelle, Seite 7, Nr. 4) und aus der DE-A 2 046 785, Beispiel 2 bekannten Farbstoffe sind denen gemäß der Erfindung in der Fixierausbeute weit unterlegen. Der erstere wird nur zu 45, der zweite nur zu 15 Gew.%, bezogen auf eingesetzten Farbstoff, bei der Massefärbung auf dem Papier fixiert. Die erfindungsgemäßen Farbstoffe werden bei der Massefärbung zu mehr als 90, in den meisten Fällen zu 98 % und darüber im Papier fixiert. Außerdem sind beide Farbstoffe den erfindungsgemäßen in den Ausblutechtheiten gegenüber Kondenswasser und 0,5 %iger Sodalösung deutlich unterlegen.

Als Substituenten kommen für $R^1$ neben Wasserstoff im einzelnen in Betracht : Hexyl, Pentyl, Butyl, Propyl, Ethyl, Methyl, Allyl und Vinyl. Für $R^1$ sind Wasserstoff und $C_1$- bis $C_4$-Alkyl, insbesondere Wasserstoff, Methyl und Ethyl bevorzugt.

Für $R^2$ und $R^3$ kommen unabhängig voneinander z. B. in Betracht : Wasserstoff, Methyl, Ethyl, Propyl, Butyl, Pentyl, Vinyl und Allyl. Vorzugsweise steht $R^2$ für Wasserstoff oder $C_1$- bis $C_4$-Alkyl. Für $R^3$ ist Wasserstoff bevorzugt. $R^4$ steht für $C_1$- bis $C_{12}$-, vorzugsweise für $C_1$- bis $C_4$-Alkyl, wie Butyl, Propyl, insbesondere Ethyl, Methyl oder Hydroxy-$C_2$- bis $C_4$-alkyl. Für $X^{\ominus}$ sind z. B. im einzelnen zu nennen : Benzolsulfonat, o- oder p-Toluol-sulfonat, $CH_3O—SO_3^{\ominus}$, $C_2H_5—O—SO_3^{\ominus}$, $Cl^{\ominus}$, 1/2 $SO_4^{2\ominus}$ und 1/2 $ZnCl_4^{2\ominus}$.

Im Falle $(m + n) > 1$ können die Farbstoffe in Form von Mischungen aus Farbstoffen mit $m + n = 1, 2, 3$ und/oder 4 vorliegen, wobei m und n als Mittelwert auch gebrochene Zahlen sein können.

Vorzugsweise ist (m + n) 1 bis 4, wobei m oder n auch 0 (null) sein kann. Besonders bevorzugt sind Farbstoffe mit n = 1 bis 4 und m = 0.

Für F sind als (m + n)-wertige Farbstoffreste zu nennen, die sich

1) von Monoazo-, Disazo- oder Polyazofarbstoffen,
2) vom Chinophthalon,
3) vom Bisdioxazin,
4) von Verbindungen der 5,6-Arylo-2-pyron-reihe,
5) von Naphtholactam-farbstoffen,
6) von Triphenylmethan- und Xanthenfarbstoffen,
7) vom Phthalocyanin,
8) vom Indigoiden,
9) von Phenyl- oder Naphthylgruppen enthaltenden Anthrachinonfarbstoffen,
10) von höher anellierten Carbonylfarbstoffen und
11) von Carbonylgruppen enthaltenden Farbstoffen wie Chinacridon und dessen Derivate, Perylen-3,4,9,10-tetracarbonsäurediimid und dessen Derivate, Naphthalin-1,4,5,8-tetracarbonsäurediimidderivate, Naphthazarinderivate, Diaminonaphthochinonderivate, Anthrapyrimidinderivate und Pyrazoloanthronderivate, ableiten.

Den neuen Farbstoffen I liegen die Farbstoffe der allgemeinen Formel II

$$F(H)_{m+n} \qquad (II)$$

zugrunde. Die Farbstoffe II müssen amidomethylierbar sein. Die Farbstoffe II sind bekannt oder sind nach bekannten Verfahren herstellbar.

1) Als Azo- und Disazofarbstoffe kommen z. B. solche in Betracht, die in der DE-OS 28 10 246, Seiten 30 bis 32 genannt sind. Die dort genannten Azoverbindungen gehören im wesentlichen zwei Gruppen an :

1.1) Verbindungen, in denen das aromatische carbocyclische Mono- oder Diamin auf eine carbocyclische oder heterocyclische Verbindung in o-Stellung zu einer Hydroxylgruppe gekuppelt ist ;

1.2) Verbindungen, die durch Kupplung von aromatischen carbocyclischen Mono- oder Diaminen oder Aminoazobenzol, das noch weiter substituiert sein kann, auf aromatische oder heterocyclische Amine oder auf Verbindungen mit enolisierbarer Ketomethylengruppe, z. B. Arylamide der Acetessigsäure oder Pyrazolone erhalten werden.

Die Azofarbstoffe werden nach der auf diesem Gebiet üblichen Weise durch das der Diazokomponente zugrundeliegende Amin und die Kupplungskomponente identifiziert, wobei der Pfeil auf die Kupplungskomponente zeigt ; Z. B. Anilin → β-Naphthol.

Beispiele für Azoverbindungen der Gruppen 1.1 und 1.2 sind :

1.1) 4-Methoxyanilin → β-Naphthol,
3,3′-Dimethoxy-4,4′-diaminodiphenyl → β-Naphthol,

Bis-(4-aminophenyl)-disulfid → β-Naphthol,
Bis-(3-amino-4-methoxyphenyl)-sulfon → β-Naphthol,
Bis-(3-amino-4-methyl-phenyl)-sulfon → β-Naphthol,
4,4'-Diaminobenzanilid → β-Naphthol,
Bis-(4-aminophenyl)-sulfon → 3-Hydroxy-2-naphthanilid,
Anilin → 3-Hydroxy-2-naphthanilid,
2-Methoxyanilin → 3-Hydroxy-4'-chlor-2-naphthanilid,
3-Methoxyanilin → 3-Hydroxy-4'-chlor-2-naphthanilid,
2-Chloranilin → 3-Hydroxy-4'-chlor-2-naphthanilid,
4-Methoxyanilin → 3-Hydroxy-2-naphth-o-anisidid,
2-Chloranilin → 3-Hydroxy-2-naphth-o-anisidid,
4-Chloranilin → 3-Hydroxy-2-naphth-o-anisidid,
5-(n-Phenylsulfamoyl)-2-methoxyanilin → 3-Hydroxy-2-naphth-o-anisidid,
Bis-(4-aminophenyl)-sulfon → 3-Hydroxy-2-naphth-o-anisidid,
Bis-(3-amino-4-methoxyphenyl)-sulfon → 3-Hydroxy-2-naphth-o-anisidid,
3,4'-Diaminobenzanilid → 3-Hydroxy-2-naphth-o-anisidid,
3',4-Diaminobenzanilid → 3-Hydroxy-2-naphth-o-anisidid,
3,3'-Dimethoxy-4,4'-diaminodiphenyl → 3-Hydroxy-2-naphth-o-anisidid,
Anilin → 3-Hydroxy-2-naphth-o-anisidid,
2-Methoxyanilin → 3-Hydroxy-2-naphth-o-anisidid,
Anilin → 3-Hydroxy-5'-chlor-2-naphth-o-anisidid,
o-Toluidin → 3-Hydroxy-5'-chlor-2-naphth-o-anisidid,
2-Methoxyanilin → 3-Hydroxy-2-naphth-o-toluidid,
2-Chloranilin → 3-Hydroxy-2-naphth-o-toluidid,
4-Brom-2-chloranilin → 3-Hydroxy-2-naphth-o-toluidid,
Bis-(3-amino-4-methoxyphenyl)-sulfon → 3-Hydroxy-2-naphth-o-toluidid,
Bis-(3-amino-4-methylphenyl)-sulfon → 3-Hydroxy-2-naphth-o-toluidid,
Bis-(4-aminophenyl)-disulfid → 3-Hydroxy-2-naphth-o-toluidid,
4-Brom-3-methylanilin → 4'-Chlor-3-hydroxy-2-naphth-o-toluidid,
3-Äthylanilin → 3'-Chlor-3-hydroxy-2-naphth-o-toluidid,
Bis-(4-aminophenyl)-disulfid → 3-Hydroxy-2-naphth-o-phenetidid,
Anilin → 3-Hydroxy-2-naphth-o-phenetidid,
o-Toluidin → 3-Hydroxy-2-naphth-o-phenetidid,
2-Methoxyanilin → 3-Hydroxy-2-naphth-o-phenetidid,
3-Jodanilin → 4'-Chlor-3-hydroxy-2',5'-dimethoxy-2-naphthanilid,
4-Isopropylanilin → 3-Hydroxy-2-naphth-2,4-xylidid,
2,5-Dimethoxyanilin → 3'-Chlor-3-hydroxy-2-naphth-o-anisidid,
2,4-Difluoranilin → 3-Hydroxy-2'-methyl-2-naphth-p-anisidid,
3,4-Diäthoxyanilin → 5'-Chlor-3-hydroxy-2',4'-dimethoxy-2-naphthanilid,
2-Methoxyanilin → 3-Hydroxy-2-carbamoylnaphthalin,
4,4'-Diaminobenzanilid → 3-Hydroxy-2-carbamoylnaphthalin,
3,3'-Diaminobenzanilid → 3-Hydroxy-2-carbamoylnaphthalin,
3,4'-Diaminobenzanilid → 3-Hydroxy-2-carbamoylnaphthalin,
3',4-Diaminobenzanilid → 3-Hydroxy-2-carbamoylnaphthalin,
Bis-(3-amino-4-methoxyphenyl)-sulfon → 3-Hydroxy-2-carbamoylnaphthalin,
Bis-(4-aminophenyl)-sulfon → 3-Hydroxy-2-N-(3-dimethylaminopropyl)-carbamoylnaphthalin,
Bis-(3-amino-4-methoxyphenyl)-sulfon → 3-Hydroxy-2-N-(3-dimethylaminopropyl)-carbamoylnaphthalin und
2-Methoxyanilin → N,N'-Bis-(3-hydroxy-2-naphthoyl)-diaminoäthan,

1.2) 3,3'-Dimethoxy-4,4'-diaminodiphenyl → 2-Methoxyacetoacetanilid,
3,3'-Dimethoxy-4,4'-diaminodiphenyl → 2-Chloracetoacetanilid,
3,3'-Dimethoxy-4,4'-diaminodiphenyl → 4-Methoxyacetoacetanilid,
4,4'-Diaminobenzanilid → Acetoacetanilid,
4,4'-Diaminobenzanilid → 2-Methylacetoacetanilid,
4,4'-Diaminobenzanilid → 2-Methoxyacetoacetanilid,
Bis-(4-aminophenyl)-disulfid → 2-Methoxyacetoacetanilid,
3,3'-Dimethoxy-4,4'-diaminodiphenyl → 1-Phenyl-3-methyl-5-pyrazolon,
Bis-(3-amino-4-methylphenyl)-sulfon → 1-(4-Methylphenyl)-3-methyl-5-pyrazolon,
Bis-(4-aminophenyl)-disulfid → 1-Phenyl-3-methyl-5-pyrazolon,
Bis-(4-aminophenyl)-sulfon → 1-Phenyl-3-methyl-5-pyrazolon,
Bis-(3-amino-4-methoxyphenyl)-sulfon → 1-Phenyl-3-methyl-5-pyrazolon,
4,4'-Diaminobenzanilid → 1-Phenyl-3-methyl-5-pyrazolon,
3,3'-Diaminobenzanilid → 1-Phenyl-3-methyl-5-pyrazolon,
4,4'-Diaminobenzanilid → 1-(4-Methylphenyl)-3-methyl-5-pyrazolon,

4-Aminoazobenzol → 1-Phenyl-3-methyl-5-pyrazolon,
4-Amino-2',3-dimethylazobenzol → 1-Phenyl-3-methyl-5-pyrazolon,
2,6-Dichlor-4-nitranilin → Aminohydrochinondimethylether → Diethylamino-4-phenyl-thiazol-1.3.

1.3) Als Monoazofarbstoffe, die den Verbindungen der Formel I zugrundeliegen, kommen außerdem Azofarbstoffe der Formel III in Betracht

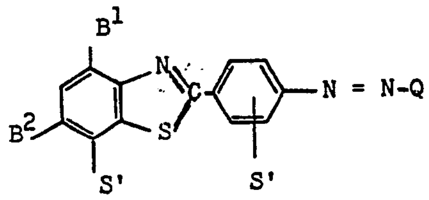

(III)

in der
$B^1$ Wasserstoff oder Methyl,
$B^2$ Wasserstoff, Methyl oder Ethoxy und
S' —$SO_3H$ oder Wasserstoff bedeuten.
Der Rest Q steht

1.3.1) für einen Naphtholrest der Formel :

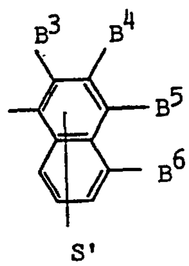

(IIIa)

in dem
$B^3$ Wasserstoff, Hydroxy, Amino, 2-Hydroxyethylamino, Methylamino oder Phenylamino,
$B^4$ Wasserstoff, Acetyl oder N-Phenylcarbamoyl,
$B^5$ Wasserstoff, Hydroxy, Methyl, Methoxy, Chlor, Brom, 2-Hydroxyethylamino oder Dimethylamino,
$B^6$ Wasserstoff, Methyl oder Methoxy und
S' Wasserstoff oder —$SO_3H$ bedeuten, und wobei $B^3$ oder $B^5$ Hydroxy sein muß ;
1.3.2) für einen Rest der Formel

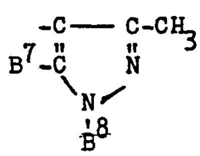

(IIIb)

in der
$B^7$ Hydroxy oder Amino und

$B^8$ 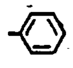 oder 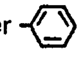 —$OCH_3$ bedeuten ;

1.3.3) für einen Rest der Formel

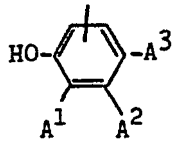

(IIIc)

in der
$A^1$ und $A^2$ unabhängig voneinander Wasserstoff oder Methyl oder eine der Gruppen $A^1$ oder $A^2$, Hydroxy,

$A^3$ Wasserstoff, Methyl, Hydroxymethyl oder Chlor bedeuten ;

1.3.4) für einen Rest der Formel

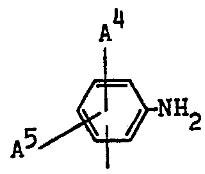

(IIId)

in der
$A^4$ Wasserstoff, Methyl oder Amino,
$A^5$ Wasserstoff, Methyl, Hydroxy, Methoxy oder Chlor bedeuten ;

1.3.5) für einen Rest der Formel

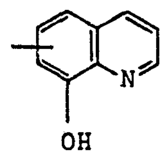

(IIIe)

1.3.6) für einen Rest der Formel

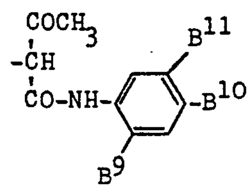

(IIIf)

in der
$B^9$ Wasserstoff, Methyl oder Methoxy,
$B^{10}$ Wasserstoff oder Chlor und
$B^{11}$ Wasserstoff oder Methoxy bedeuten ;

1.3.7) für einen Rest der Formel

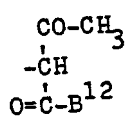

(IIIg)

worin
$B^{12}$ $—OCH_3$, $—OC_4H_9$, $—NH_2$, $—NH—CH_3$, 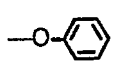

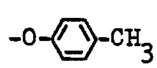 oder 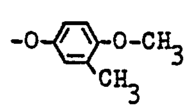

bedeutet ;

1.3.8) für einen Rest der Formel

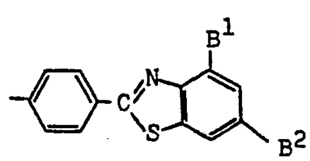

(IIIh)

worin

$B^1$ und $B^2$ die oben angegebenen Bedeutungen haben ;

1.3.9) für einen Rest der Formel

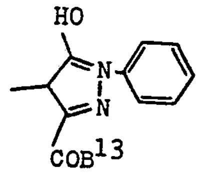

(IIIi)

in der $B^{13}$ $—NH_2$ oder $—OCH_3$ bedeutet ; oder

1.3.10) für einen Rest der Formeln

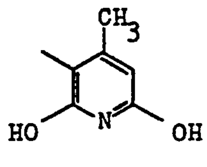

,

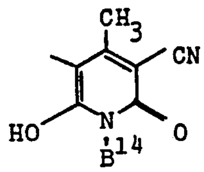

,

(IIIk) (IIIl)

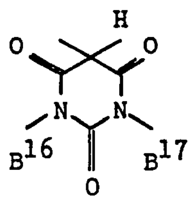

,

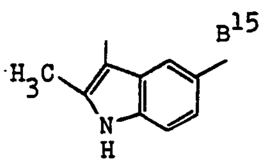

oder

(IIIm) (IIIn)

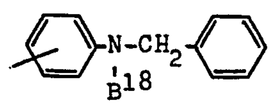

,

(IIIo)

in denen

$B^{14}$ Methyl oder Ethyl,

$B^{15}$ Wasserstoff, Methyl, Ethyl, Methoxy, Chlor, Brom, Cyan oder Trifluormethyl,

$B^{16}$ und $B^{17}$ unabhängig voneinander Wasserstoff, $C_1$- bis $C_4$-Alkyl, 3-Methoxypropyl, 3-Ethoxypropyl oder Phenyl und

$B^{18}$ Wasserstoff, Methyl, Ethyl oder $C_1$- bis $C_4$-Alkoxy-$C_2$- oder $C_3$-alkyl bedeuten.

1.4) Weiterhin kommen für II Azoverbindungen der allgemeinen Formel IV

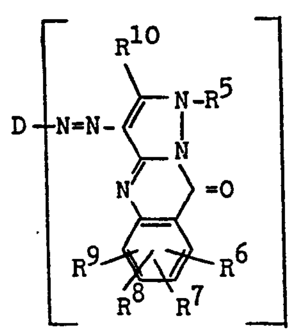

s

(IV)

in Betracht, in der

D den Rest einer üblichen Diazo- oder Tetrazoverbindung, z. B. die in der DE-A 28 43 873 beschriebenen, und

s 1 oder 2,

$R^5$ Wasserstoff oder einen aromatischen Rest,

$R^6$ Wasserstoff, Chlor, Brom, Nitro, Methyl, Trifluormethyl, Carboalkoxy, gegebenenfalls substituiertes Carbamoyl oder Sulfamoyl, Sulfonsäurearylester, Cyan Alkanoylamino oder Phenyl,

$R^7$ Wasserstoff, Chlor oder Brom,

$R^8$ und $R^9$ unabhängig voneinander Wasserstoff, Chlor oder Brom oder zusammen einen annellierten Ring, und

$R^{10}$ Hydroxy, Methyl, Carboalkoxy, gegebenenfalls substituiertes Aryl oder Alkanoylamino, vorzugsweise Metyl oder gegebenenfalls durch Chlor oder Methoxy substituiertes Phenyl bedeuten.

2) Als vom Chinophthalon sich ableitende Farbstoffe II sind z. B. 2-[1,3-Dioxo-hydrinyl-(2)]-chinolin und 2-[1,3-Dioxohydrindyl-(2)]-5,6-benzochinolin zu nennen. Die Chinophthalone werden durch Kondensation aromatischer o- oder peri-Dicarbonsäureanhydride mit Verbindungen, die eine Methyl- oder aktivierte Methylengruppe aufweisen, wie gegebenenfalls substituierte Chinaldine erhalten. Diese Farbstoffe können als Substituenten z. B. Halogen, Alkyl, Alkoxy, Aryl, Cyan, Nitro, Alkanoylamino, Alkylmercapto und/oder Arylmercapto tragen.

3) Für $F(H)_{m+n}$ kommt als Bisdioxazinverbindung z. B. CI Pigmentviolett 23, CI No 51 319 in Betracht.

4) Von Verbindungen der 5,6-Arylo-2-pyrone kommen für II solche in Betracht, die in der 3-Stellung des Pyranrings durch einen heterocyclischen Rest substituiert sind. Verbindungen dieser Reihe, die für die Herstellung der erfindungsgemäßen Farbstoffe geeignet sind, werden z. B. in der DE-B 10 98 125 beschrieben.

5) Weiterhin kommen für $F(H)_{m+n}$ Kondensationsprodukte von Naphtholactamen mit Barbitursäure oder deren Derivaten in Betracht, wie sie in der DE-C 24 28 198 beschrieben sind. Bevorzugte Naphtholactamfarbstoffe haben die Formel

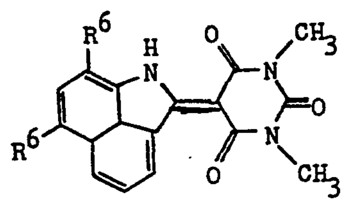

(V)

in der

$R^6$ Halogen, wie Chlor oder Brom oder gegebenenfalls substituiertes Thiophenyl bedeuten.

6) Weiterhin kommen als Farbstoffe der Formel II Triphenylmethanfarbstoffe, wie C.I. Basic Blue 26 ; C.I. No. 51 319 und Xanthenfarbstoffe, z. B. C.I. Solvent Violet 10 ; C.I. No. 45 190 : 1 und C.I. Solvent Dye 45, C.I. No. 45 195 in Betracht.

7) Als Phthalocyanine sind für $F(H)_{m+n}$ z. B. zu nennen : Kupfer-, Cobalt-, Nickel-, Zink-, Aluminium- oder Eisenphthalocyanine und metallfreie Phthalocyanine. Diese Phthalocyanine können bis zu 2 Chloratome im Molekül enthalten.

8) Für $F(H)_{m+n}$ kommen als Indigoide z. B. Indigo, Dichlor, Tetrachlor- und Dibromindigo, Thioindigo und dessen Dichlor- und Dibromderivate, ferner gemischte Indigo-Thioindigo-Derivate und indigoide Küpenfarbstoffe mit höher kondensierten Ringsystemen in Betracht.

9) Als Anthrachinonfarbstoffe kommen für $F(H)_{m+n}$ solche in Betracht, die mindestens einen der folgenden Substituenten tragen : Phenylamino, Phenylalkylamino, Phenoxy, Thiophenyl, Naphthylamino, Phenyl oder Phenyltriazinyl. Die Farbstoffe tragen ggf. bis zu 4 weitere Substituenten, wie sie in Anthrachinonfarbstoffen üblich sind, z. B. Amino, Alkylamino, Dialkylamino, Alkoxyalkylamino, Hydroxy, Alkoxy, Alkyl, Chlor, Brom, Nitro, Sulfamoyl, N-Alkyl- und N,N-Dialkylsulfamoyl, Carbamoyl, N-Alkyl- und N,N-Dialkylcarbamoyl, N-C-Acylamino, Carboxy und $—SO_3H$.

Die Phenylamino-, Phenylalkylamino-, Naphthylamino- und Phenyltriazinylgruppen stehen vorzugsweise in α-Stellung. Phenoxy, Phenylthio können sowohl in α- wie auch in β-Stellung stehen, während der Phenylrest in der Regel in der β-Stellung steht.

10) Zur Gruppe der höher anellierten Carbonylfarbstoffe gehören 10.1) Carbonylgruppen enthaltende Farbstoffe auf der Basis Anthrachinon und Benzanthron und 10.2) Carbonylgruppen enthaltende polycyclische Farbstoffe auf der Basis Naphthalin. Für 10.1) kommen z. B. Farbstoffe in

Betracht, die sich vom Violanthron, Isoviolanthron, Pyranthron, Benzanthronylaminoanthrachinon, Acedianthron, Indanthron, von den cis- und trans-Dibenzopyrenchinonen ableiten.

Im einzelnen sind z. B. für 10.1) zu nennen : Violanthron, Isoviolanthron, Benzanthronpyrazolanthron, Bisbenzanthronperithiophen, Pyranthron, dessen Chlor und/oder Brom enthaltende Derivate, Indanthron, Chlorindanthron mit 1 bis 2 Chloratomen im Molekül, cis- und trans-Dibenzpyrenchinone und deren Bromderivate, Anthrachinon-monoacridone, Anthrachinonbisacridone und Anthrachinonthioxanthone.

Für 10.2) kommen als Carbonylgruppen enthaltende Farbstoffe auf der Basis Naphthalin solche in Betracht, die sich z. B. vom Anthanthron ableiten.

Von den Farbstoffen der Formel I sind solche bevorzugt, die sich ableiten

a) von Kupplungsprodukten von aromatischen carbocyclischen Diaminen auf β-Naphthol, dessen Derivate, und Acetoacetanilide ;

b) von Kupplungsprodukten von aromatischen carbocyclischen Diaminen auf Pyrazolon-5-verbindungen, insbesondere auf 1-Phenyl-3-methylpyrazolon-(5) ;

c) von Kupplungsprodukten von gegebenenfalls substituierten Aminoazobenzolen auf Pyrazolon-5-verbindungen, insbesondere 1-Phenyl-3-methyl-pyrazolon-(5) ;

d) von Farbstoffen der Formel III, in der Q für einen der Reste der Formeln IIIa, IIIb, IIIf, IIIg, IIIh, IIIm oder IIIo steht ;

e) von Farbstoffen der Formel IV, in der D ein gegebenenfalls falls durch Chlor, Nitro, Methoxy, Methyl, Phenylazo oder Tolylazo substituiertes Phenyl ist, wobei der Phenylrest einen oder zwei Substituenten tragen kann und die Substituenten — mit Ausnahme der Nitro-, Phenylazo- oder Tolylazogruppe — gleich oder verschieden sein können ;

f) vom Chinophthalon, insbesondere vom 5,6-Benzochinophthalon ;

g) von 7-Dialkylaminocumarinen, die in der 3-Stellung eine Benzimidazolyl-(2)-Gruppe tragen,

h) von Kondensationsprodukten von Naphtholactamen mit Barbitursäure oder N-substituierten Barbitursäuren und

i) von Triphenylmethan- oder Xanthenfarbstoffen.

Von den unter (7) bis (10) genannten Farbstoffgruppen sind die der (k) Kupferphthalocyanine, (1) der Violanthrone, der Isoviolanthrone, der Naphthoylenbenzimidazole und Anthrachinonbisacridone bevorzugt.

Aus coloristischen und anwendungstechnischen Gründen sind die neuen Farbstoffe, die in den Beispielen 1, 3, 64, 71, 73, 76, 78, 79, 81, 82, 84, 85, 88, 91a, 91b und 92 beschrieben werden, und die sich vom Kupferphthalocyanin ableitenden Farbstoffe (I) besonders bevorzugt.

Die neuen Verbindungen der Formel I mit m = 0 können durch Umsetzen der Farbstoffe $F(H)_{m+n}$ (II) mit wasserfreiem Formaldehyd und Imidazolverbindungen der Formel VI

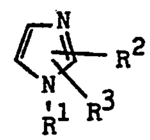

(VI)

in Gegenwart von sauren Mitteln erhalten werden. In der Formel (VI) stehen $R^1$ für Wasserstoff, $C_1$- bis $C_6$-Alkyl oder $C_2$- bis $C_6$-Alkenyl und $R^2$ und $R^3$ unabhängig voneinander für Wasserstoff, $C_1$- bis $C_5$-Alkyl oder $C_2$- bis $C_6$-Alkenyl, wobei die Alkylgruppen linear oder verzweigt sein können.

Der Formaldehyd kann bei der Reaktion in monomerer Form oder vorzugsweise in polymerer Form wie Paraformaldehyd oder Trioxan angewendet werden.

Als Imidazole VI sind im einzelnen z. B. zu nennen : 1-Methyl-, 1-Ethyl-, 1-n-Propyl-, 1-Isopropyl-, 1-n-Butyl-, 1-Isobutyl-, 1-tert.-Butyl-, 1-Vinyl- und 1-Allylimidazol, 4-Methylimidazol, 2-Methylimidazol, 1-Butyl-2-methylimidazol, 1,2-Dimethyl-, 1-Ethyl-2-methyl- und 1-Propyl-2-methylimidazol, von denen das 4-Methylimidazol besonders bevorzugt ist.

Die Imidazole VI werden in mindestens der stöchiometrisch erforderlichen Menge, vorteilhafterweise im Überschuß zusammen mit wasserfreiem Formaldehyd angewendet.

Man kann die Umsetzung zu I auch mit C-Hydroxylmethylimidazolen durchführen, die vorher aus VI und wasserfreiem Formaldehyd hergestellt worden sind, z. B. 4-Hydroxymethyl-5-methylimidazol oder 4-Methyl-5-hydroxymethylimidazol. Die Imidazole VI können auch in Form ihrer Salze mit Mineralsäuren angewendet werden.

Die Umsetzung erfolgt im allgemeinen bei Temperaturen von 0 bis 140 °C, vorzugsweise bei Temperaturen von 0 bis 100 °C. Die Reaktionsdauer ist von der Zahl der in II einzuführenden Methylenimidazolgruppen, dem Farbstoff II, dem sauren Mittel und der Reaktionstemperatur abhängig. Die Reaktionsdauer liegt im allgemeinen zwischen 1 und 48 Stunden.

Als saure Mittel, die gleichzeitig auch als Reaktionsmedium dienen können, kommen für das Verfahren z. B. 80 bis 100 gew.%ige Schwefelsäure oder Phosphorsäure, gegebenenfalls zusammen mit

wasserabspaltenden Mitteln wie Schwefeltrioxid (Oleum), Phosphorpentoxid, Meta- oder Polyphosphorsäure, Essigsaüreanhydrid, Benzol- oder Toluolsulfonsäure in Betracht. Als saures Mittel, das gleichzeitig auch als Reaktionsmedium dient, ist 96 bis 100 gew.%ige Schwefelsäure, bis zu 12 gew.%iges Oleum oder eine Mischung aus 85 %iger Phosphorsäure und Phosphorpentoxid bevorzugt.

Gewünschtenfalls können bei der Umsetzung in Schwefelsäure oder Oleum während oder nach Beendigung der Umsetzung mit der Imidazolverbindung durch Erhöhen der Schwefelsäurekonzentration und/oder durch Erhöhen der Temperatur eine oder mehere Sulfonsäuregruppen in die Verfahrensprodukte eingeführt werden. Farbstoffe fur das Färben von Papier sollten in der Regel nicht mehr als eine Sulfonsäuregruppe, vorzugsweise im Mittel 0 bis 0,5 Sulfonsäuregruppen je Molekül enthalten.

Die Verfahrensprodukte I mit m = 0 werden durch Austragen des Reaktionsgemisches auf Wasser oder Eis/Wasser gefällt und abfiltriert. Für den Fall, daß I in der verdünnten wäßrigen Säure teilweise bis vollständig löslich ist, wird I durch Zugeben von basischen Mitteln, z. B. Natron-, Kalilauge oder Ammoniak in Form der freien Base gefällt und durch Filtrieren abgetrennt und getrocknet oder in Form des wasserfeuchten Preßkuchens weiterverarbeitet.

Eine weitere Möglichkeit, das Verfahrensprodukt aus der verdünnten wäßrigen Säure zu isolieren, besteht z. B. in der Fällung als Zinkchloriddoppelsalz mit Hilfe von Zinkchlorid und Natriumchlorid.

Für den Fall, daß die Verfahrensprodukte Sulfonsäuregruppen enthalten, liegen diese in der Regel in Form der Kalium-, Natrium- oder Ammoniumsalze vor.

Farbstoffe der Formel I, die sich von Monoazo- oder Disazofarbstoffen ableiten, können auch durch Kupplung der entsprechenden Diazoverbindung auf eine mindestens eine Imidazoylmethylengruppe enthaltende Kupplungskomponente erhalten werden. Als Kupplungskomponente ist z. B. das Amin der Formel (VII)

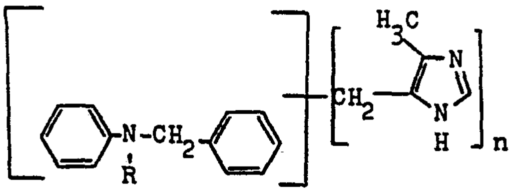

(VII)

zu nennen, in der R für Wasserstoff, Methyl, Ethyl oder $C_1$- bis $C_4$-Alkoxy-$C_2$ oder $C_3$-alkyl und n für 1 oder 2 stehen.

Eine für diese Kupplungskomponente geeignete Diazoverbindung wird durch Diazotierung von z. B. 2-(4'-Aminophenyl)-6-methylbenzthiazol erhalten.

Die Imidazolylmethylengruppen tragenden Kupplungskomponenten werden entsprechend den Farbstoffen I durch Kondensation der mindestens einen aromatischen Ring enthaltenden Kupplungskomponente mit einem Imidazol der Formel VI und Paraformaldehyd unter den oben angegebenen Bedingungen hergestellt.

Verbindungen der Formel I, die quartäre Imidazolylgruppen enthalten, d. h. m ist 1 bis 5, werden aus den Methylenimidazolylgruppen enthaltenden Farbstoffen I mit m = 0 durch Alkylierung in an sich bekannter Weise, z. B. durch Umsetzen mit den Chlor-$C_2$- bis $C_4$-alkanolen, entsprechenden Schwefelsäurediestern wie Dimethylsulfat, Diäthylsulfat oder den entsprechenden Sulfonsäureestern wie Toluolsulfonsäure-$C_1$- bis $C_4$-alkylester, von denen die Methyl- und Ethylester, 2-Chlorethanol und Chlorpropanol besonders bevorzugt sind, erhalten.

Der technische Vorteil der neuen Imidazolylgruppen enthaltenden Farbstoffe liegt in ihrer Zugänglichkeit nach einem einfachen, gewerbehygienisch und toxikologisch unbedenklichen Verfahren. Im Gegensatz dazu werden die als nächstliegender Stand der Technik anzusehenden Farbstoffe der US-A 35 65 570, der DE-B 15 69 848 und DE-A 25 08 892 über die entsprechenden Chlormethylverbindungen hergestellt, bei deren Herstellung entweder Bis-chlormethyläther verwendet wird oder als Nebenprodukt entsteht.

Die Erfindung soll durch die folgenden Ausführungsbeispiele weiter erläutert werden. Die im folgenden angegebenen Teile und Prozentangaben beziehen sich auf das Gewicht. Die Absorptionsmaxima (λ max) der Farbstoffe wurden in Lösungen bestimmt, die — wenn nichts anderes angegeben ist — 0,02 g Farbstoff in 5 gew.%iger Essigsäure enthielten. Der Rest der Phthalocyanins wird durch Pc wiedergegeben.

### Beispiel 1

In 165 Teile 96 %ige Schwefelsäure werden nebeneinander bei 10 bis 15 °C 21,5 Teile 4-Methylimidazol und 7,5 Teile Paraformaldehyd eingetragen und das Gemisch 30 Minuten bei 40 °C gerührt. Nach dem Abkühlen auf 0 bis 5 °C werden 26,9 Teile 4,4'-Diaminobenzanilid → 2 Mol β-Naphthol in Portionen zugegeben. Danach läßt man die Temperatur langsam auf 20 °C steigen und rührt 30 Stunden bei 20 bis 25 °C. Das Reaktionsgemisch wird auf Eiswasser ausgetragen, die Säure mit verdünnter Natronlauge neutralisiert, die Fällung filtriert, mit Wasser salzfrei gewaschen und getrocknet.

Ausbeute : 42 Teile des Disazofarbstoffs der Formel

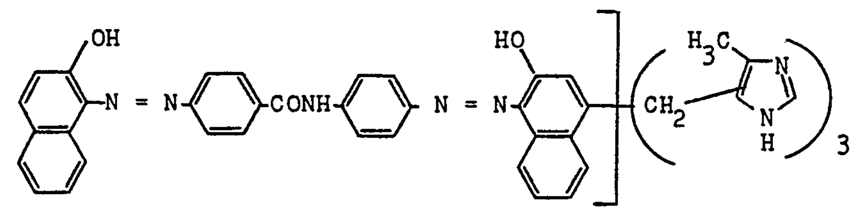

in Form eines roten Pulvers. Lösungsfarbe in verdünnter Eissigsäure : rot ; $\lambda_{max}$ 505 nm.

Analyse : $C_{48}H_{41}N_{11}O_3$ (M 819) ber. N 18,8 %
gef. N 19,0 %.

Bei der Papiermassefärbung erhält man ein farbloses Abwasser. Bei der Papiermassefärbung nach dem Anwendungsbeispiel 3 erhält man rotes Papier mit hoher Brillanz und sehr guter Wasserechtheit.

Beispiel 2

Man verfährt wie in Beispiel 1, verwendet jedoch als (II) 28,7 Teile 4,4'-Diamino-benzolsulfanilid → β-Naphthol.

Man erhält 42 Teile des Disazofarbstoffs der Formel

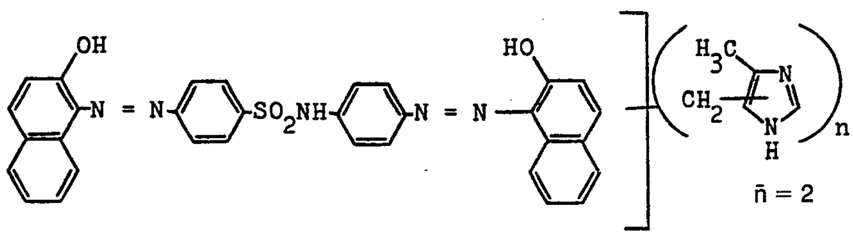

$\bar{n} = 2$

Das Farbstoffpulver ist rotviolett, die Lösungsfarbe in verdünnter Essigsäure ist ebenfalls rotviolett. $\lambda_{max}$ 483 nm.

Beispiel 3

In 165 Teile 96 %ige Schwefelsäure werden nebeneinander 20,5 Teile 4-Methylimidazol und 7,5 Teile Paraformaldehyd bei 0 bis 5 °C eingetragen und das Gemisch 0,5 Stunden bei 40 °C gerührt. Nach dem Abkühlen auf 0 bis 5 °C werden 31,5 Teile Farbstoff 4,4'-Diamino-3,3'-dichlordiphenyl → Acetoacet-anilid eingetragen und 15 Stunden bei 20 bis 25 °C gerührt.

Das Reaktionsgemisch wird auf Eiswasser ausgetragen, mit verdünnter Natronlauge neutralisiert, die Fällung filtriert, salzfrei gewaschen und bei 50 °C getrocknet.

Ausbeute : 47 Teile des Disazofarbstoffs der Formel :

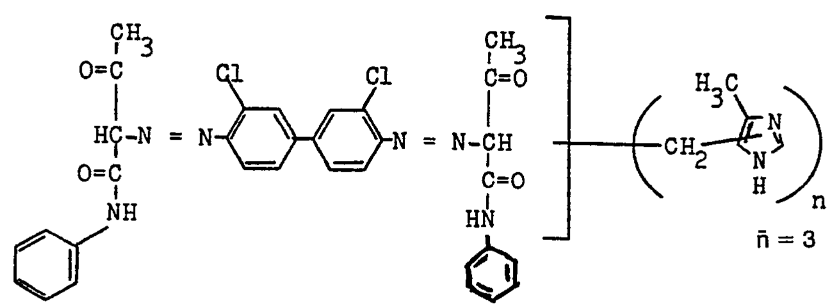

$\bar{n} = 3$

Lösung in verdunnter Essigsäure : gelb.

Analyse : $C_{47}H_{44}Cl_2N_{12}O_4$ (n = 3) (M 911) ber. 18,4 %
gef. 18,6 %.

Bei der Massefärbung von Papier erhält man gelbes Papier. Das Abwasser ist farblos. Das Absorptionsmaximum liegt bei 398 nm.

Beispiel 4

Man arbeitet wie im Beispiel 3 angegeben, verwendet jedoch als Farbstoff 4,4'-Diamino-3,3'-dichlordiphenyl → 2-Methoxyacetoacetanilid. Ausbeute: 50 Teile des 3 Imidazolylmethylengruppen enthaltendenden Farbstoffs.

Analyse: $C_{49}H_{48}Cl_2N_{12}O_6$ (n = 3) (M 971) ber. N 17,3 %
gef. N 17,9 %

Der Farbstoff löst sich mit gelber Farbe in verdünnter Essigsäure. Bei der Massefärbung von Papier erhält man farblose Abwässer. Das Absorptionsmaximum liegt bei 422 nm.

Beispiele 5 bis 37

Verfährt man entsprechend den Angaben in den Beispielen 1 bis 3, verwendet jedoch die in der folgenden Tabelle durch die Amine und die Kupplungskomponente charakterisierten Farbstoffe, so erhält man die entsprechenden 4-Methylimidazolylmethylengruppen enthaltenden Farbstoffe. Die Farbstoffe enthalten 1, 2 oder 3 Imidazolylmethylengruppen. Es können auch Gemische aus Farbstoffen vorliegen, die 1, 2 und 3 dieser Gruppen enthalten.

Die erhaltenen Farbstoffe lösen sich in verdünnter Essigsäure, Propionsäure, Milchsäure und Methoxyessigsäure in den angegebenen Farbtönen. Auf Papier erhält man Färbungen in den gleichen Farbtönen.

| Beispiel | Amin | Kupplungskomponente | Farbton |
|---|---|---|---|
| 5 | 4,4'-Diamino-diphenylharnstoff | p-Kresol | gelb |
| 6 | 3,3'-Dimethoxy-4,4'-diamino-diphenyl | ß-Naphthol | rötlich-violett |
| 7 | Bis-(4-aminophenyl)-disulfid | ß-Naphthol | orange |
| 8 | Bis-(3-Amino-4-methoxyphenyl)-sulfon | ß-Naphthol | rötlich-orange |
| 9 | Bis-(3-amino-4-methylphenyl)-sulfon | ß-Naphthol | gelblich-orange |
| 10 | Bis(4-aminophenyl)-sulfon | 3-Hydroxy-2-naphth-o-anilid | rötlich-orange |
| 11 | Bis(4-aminophenyl)-sulfon | 3-Hydroxy-2-naphth-o-anisidid | gelblichrot |
| 12 | Bis-(3-amino-4-methoxyphenyl)-sulfon | 3-Hydroxy-2-naphth-o-anisidid | rot |
| 13 | 3,4'-Diaminobenzanilid | 3-Hydroxy-2-naphth-o-anisidid | bläulichrot |
| 14 | 3',4-Diaminobenzanilid | 3-Hydroxy-2-naphth-o-anisidid | gelblichrot |
| 15 | 3,3'-Dimethoxy-4,4'-diamino-biphenyl | 3-Hydroxy-2-naphth-o-anisidid | rötlich-violett |
| 16 | Bis-(4-aminophenyl)-disulfid | 3-Hydroxy-2-naphth-o--phenetidid | bläulichrot |
| 17 | Bis-(3-amino-4-methoxyphenyl)-sulfon | 3-Hydroxy-2-naphth-o--toluidid | rot |
| 18 | Bis-(3-amino-4-methylphenyl)-sulfon | 3-Hydroxy-2-naphth-o--toluidid | rötlich-orange. |
| 19 | Bis-(4-aminophenyl)-disulfid | 3-Hydroxy-2-naphth-o--toluidid | bläulichrot |
| 20 | 4,4'-Diaminobenzanilid | 3-Hydroxy-2-carbamoyl-naphthalin | bläulichrot |
| 21 | 3,3'-Diaminobenzanilid | 3-Hydroxy-2-carbamoyl-naphthalin | gelblichrot |
| 22 | 3,4'-Diaminobenzanilid | 3-Hydroxy-2-carbamoyl-naphthalin | bläulichrot |
| 23 | 3',4-Diaminobenzanilid | 3-Hydroxy-2-carbamoyl-naphthalin | gelblichrot |
| 24 | Bis-(3-amino-4-methoxyphenyl)-sulfon | 3-Hydroxy-2-carbamoyl-naphthalin | gelblichrot |

(Fortsetzung)

| Beispiel | Amin | Kupplungskomponente | Farbton |
|---|---|---|---|
| 25 | Bis-(4-aminophenyl)-sulfon | 3-Hydroxy-2-N-(3-dimethyl-aminopropyl)-carbamoyl-naphthalin | gelblichrot |
| 26 | Bis-(3-amino-4-methoxyphenyl)-sulfon | 3-Hydroxy-2-N-(3-dimethyl-aminopropyl)-carbamoyl-napthalin | rot |
| 27 | 4,4'-Diaminobenzanilid | Acetoacetanilid | gelb |
| 28 | 4,4'-Diaminobenzanilid | 2-Methylacetoacetanilid | gelb |
| 29 | 4,4'-Diaminobenzanilid | 2-Methoxyacetoacetanilid | gelb |
| 30 | Bis-(4-aminophenyl)-disulfid | 2-Methoxyacetoacetanilid | rötlichgelb |
| 31 | Bis-(4-aminophenyl)-disulfid | 1-Phenyl-3-methyl-5-pyrazolon | rötlichgelb |
| 32 | Bis-(4-aminophenyl)-sulfon | 1-Phenyl-3-methyl-5-pyrazolon | rötlichgelb |
| 33 | Bis-(3-amino-4-methoxyphenyl)-sulfon | 1-Phenyl-3-methyl-5-pyrazolon | rötlichgelb |
| 34 | 4,4'-Diaminobenzanilid | 1-Phenyl-3-methyl-5-pyrazolon | rötlichgelb |
| 35 | 3,3'-Diaminobenzanilid | 1-Phenyl-3-methyl-5-pyrazolon | rötlichgelb |
| 36 | 4,4'-Diaminobenzanilid | 1-(4-Methylphenyl)-3-methyl-5-pyrazolon | rötlichgelb |
| 37 | Anilin → 1-Naphthylamin | 2,3-Dihydro-2,2-dimethyl-perimidin | schwarzbraun |

Beispiel 38

In 270 Teile 96 %ige Schwefelsäure werden gleichzeitig 21,5 Teile 4-Methylimidazol und 7,5 Teile Paraformaldehyd bei 10 bis 15 °C eingetragen und 2 Stunden bei 50 °C gerührt. Bei 20 °C werden 21,5 Teile Monoazoverbindung 2-(3'-Phenyloxadiazolyl-1',2',4')-4-chlor-anilin → 2,6-Dihydroxy-3-methyl-4-cyanpyridin in kleinen Portionen eingetragen. (Die Monoazoverbindung wurde nach dem in der DE-PS 24 57 687, Beispiel 64 beschriebenen Verfahren hergestellt.) Die Mischung wird 4 Stunden bei 50 °C, 16 Stunden bei 20/25 °C gerührt und darauf auf Eiswasser ausgetragen. Die Lösung wird mit verdünnter Natronlauge neutralisiert, die Fällung abgesaugt, salzfrei gewaschen und getrocknet.

Ausbeute : 29 Teile Farbstoff der eine Imidazolylmethylengruppe enthält. Absorptionsmaximum 400 nm.

Werden die anderen in der DE-PS 24 57 687 genannten Monoazoverbindungen in analoger Weise umgesetzt, so werden ebenfalls gelb bis rote imidazolylmethylierte Produkte erhalten, die im Mittel eine oder zwei Imidazolylmethylengruppen enthalten. Die Farbstoffe sind in verdünnter Essigsäure, Milchsäure oder Methansulfonsäure löslich.

Beispiele 39 bis 55

Man verfährt entsprechend den Angaben im Beispiel 38, verwendet jedoch die in der folgenden Tabelle durch das Monoamin und die Kupplungskomponente charakterisierten Monoazoverbindungen. Man erhält Farbstoffe, die eine 4-Methylimidazolylmethylengruppe tragen. Die Farbstoffe lösen sich in verdünnter Essigsäure, Propionsäure, Milchsäure und Methoxyessigsäure in den angegebenen Farbtönen. Papier wird in der Masse in den gleichen Farbtönen angefärbt. Dabei wird ein farbloses bis schwach gefärbtes Abwasser erhalten.

| Beispiel | Monoamin | Kupplungskomponente | Farbton |
|---|---|---|---|
| 39 | 4-Methoxyanilin | ß-Naphthol | blaßbraun |
| 40 | 2-Methoxyanilin | 3-Hydroxy-4'-chloro-2-naphthanilid | bläulichrot |
| 41 | 2-Chloroanilin | 3-Hydroxy-4'-chloro-2-napthanilid | gelblichrot |

(Fortsetzung)

| Beispiel | Amin | Kupplungskomponente | Farbton |
|---|---|---|---|
| 42 | Anilin | 3-Hydroxy-2-naphthanilid | gelblichrot |
| 43 | 2-Chloroanilin | 3-Hydroxy-2-naphth-o-anisidid | gelblichrot |
| 44 | 4-Chloroanilin | 3-Hydroxy-2-naphth-o-anisidid | gelblichrot |
| 45 | 5-N-Phenylsulfamoyl-2-methoxy-anilin | 3-Hydroxy-2-naphth-o-anisidid | rot |
| 46 | Anilin | 3-Hydroxy-2-naphth-o-anisidid | gelblichrot |
| 47 | 2-Methoxyanilin | 3-Hydroxy-2-naphth-o-anisidid | bläulichrot |
| 48 | Anilin | 3-Hydroxy-5'-chloro-2-naphth--o-anisidid | gelblichrot |
| 49 | o-Toluidin | 3-Hydroxy-5'-chloro-2-naphth--o-anisidid | gelblichrot |
| 50 | 2-Methoxyanilin | 3-Hydroxy-2-naphth-o-tolu-idid | bläulichrot |
| 51 | 2-Chloroanilin | 3-Hydroxy-2-naphth-o-tolu-idid | gelblichrot |
| 52 | Anilin | 3-Hydroxy-2-naphth-o--phenetidid | gelblichrot |
| 53 | o-Toluidin | 3-Hydroxy-2-naphth-o--phenetidid | bläulichrot |
| 54 | 2-Methoxyanilin | 3-Hydroxy-2-naphth-o--phenetidid | bläulichrot |
| 55 | 2-Methoxyanilin | 3-Hydroxy-2-carbamoyl-naphthalin | bläulichrot |

## Beispiel 56

In 276 Teilen 96 %iger Schwefelsäure werden bei 10 bis 20 °C in kleinen Portionen 23 Teile Solvent Black 3, CI 26 150, eingetragen und darauf bei 20 °C 18 Teile 4-Methyl-5-hydroxymethyl-imidazol-hydrochlorid zugesetzt. Das Reaktionsgemisch wird 5 Stunden bei 40 °C gerührt, darauf auf 1 000 Teile Eiswasser ausgetragen, vom Ungelösten filtriert und das Filtrat mit Natronlauge neutralisiert. Die Fällung wird abgesaugt, salzfrei gewaschen und getrocknet.

Ausbeute : 17 Teile imidazolylmethylierter Azofarbstoff mit $\bar{n} = 1$, der partiell sulfoniert ist.

## Beispiel 57

In 250 Teilen Schwefelsäuremonohydrat werden 20 Teile 2-(4'-Aminophenyl)-6-methylbenzthiazol → β-Naphthol und 16,4 Teile 4-Methylimidazol bei 20 °C gelöst, darauf werden bei 20 bis 25 °C innerhalb von 3 Stunden 8,3 Teile Paraformaldehyd in kleinen Portionen eingetragen. Die Mischung wird 16 Stunden bei 20 bis 25 °C gerührt, auf 2 000 Teile Eiswasser ausgefällt und mit 400 Teilen 50 %iger Natronlauge auf pH 10 gestellt. Der Niederschlag wird abfiltriert, mit Wasser neutral und salzfrei gewaschen und bei 80 °C getrocknet.

Ausbeute : 31,2 Teile eines imidazolylmethylierten Azofarbstoffs der Formel

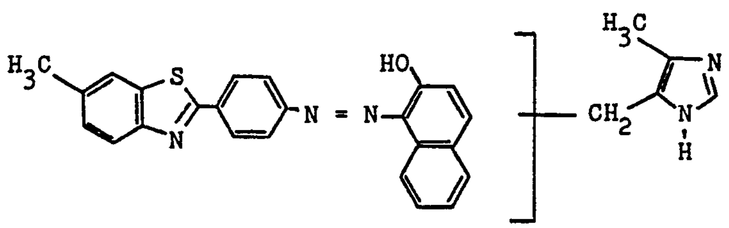

in Form eines roten Pulvers.

Analyse : $C_{29}H_{23}N_5OS$ (489) ber. N 14,3 S 6,5%

gef. N 15,5 S 6,2 %

Lösungsfarbe in 30 %iger Essigsäure : rot ; $\lambda_{max}$ 499 nm.

Beispiele 58 bis 63

Entsprechend den Angaben in Beispiel 57 werden die in der folgenden Tabelle durch das Amin und die Kupplungskomponente charakterisierten Monoazoverbindungen mit 4-Methylimidazol unter den in Spalte 7 angegebenen Bedingungen umgesetzt. Die erhaltenen Farbstoffe wurden wie im Beispiel 57 isoliert. Die Zahl der 4-Methylimidazolylmethylengruppen ist in Spalte 4 angegeben.

Die Lösungsfarbe in verdünnter Essigsäure ist in Spalte 5 angegeben. Bei der Massefärbung von Papier wird das Papier im glerchen Farbton gefärbt. Das Abwasser ist farblos bis praktisch farblos.

(Siehe Tabelle Seite 16 f.)

| Beispiel | Amin | Kupplungskomponente | n | Farbe | $\lambda_{max}$ [nm] | Reaktionsdauer [h] | Reaktionstemperatur [°C] |
|---|---|---|---|---|---|---|---|
| 58 | 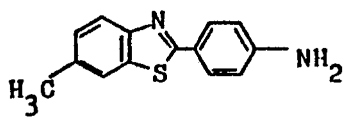 | 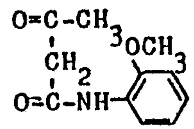 | 1 | gelb | 393 | 2 | 50 |
| 59 | " | 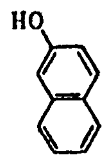 | n ≈ 1 | rot | 499 | 16 | 20-25 |
| 60 | " | 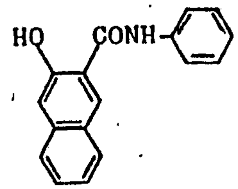 | n ≈ 1 | blaust. rot | | a) 7<br>b) 4 | 40<br>60 |
| 61 | " | 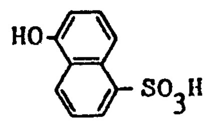 | n ≈ 2 | blaust. rot | | a) 17<br>b) 8<br>c) 8 | 20-25<br>40<br>60 |
| 62 | 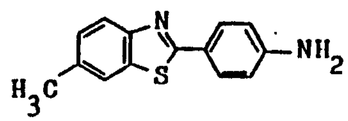 | 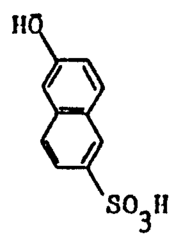 | n ≈ 2 | orange | | a) 10<br>b) 5 | 60<br>100 |
| 63 | " | 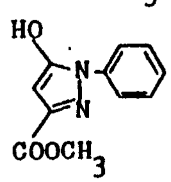 | n ≈ 1 | gelb | | a) 19<br>b) 5 | 20-25<br>40 |

Beispiel 64

In 270 Teile 96 %ige Schwefelsäure werden unter Kühlung bei 10 bis 15 °C gleichzeitig 17 Teile 4-Methylimidazol und 6 Teile Paraformaldehyd eingetragen und bei 40 °C verrührt. Nach 2 Stunden werden in kleinen Portionen 19,6 Teile 2-(4'-Aminophenyl)-6-methylbenzimidazol → Barbitursäure eingestreut. Nach 9 Stunden bei 40 °C wird die Lösung auf Eiswasser ausgetragen, die Fällung abgesaugt, mit Kleinen Portionen Eiswasser neutral gewaschen und bei 50 °C im Vakuum getrocknet.

Ausbeute : 24 Teile Azofarbstoff der Formel

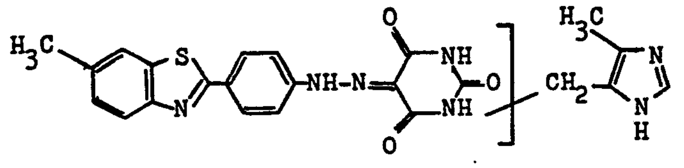

Analyse : $C_{13}H_{19}N_7O_3S$ (473) ber. N 20,6 S 6,7
gef. N 20,6 S 6,3

Eine essigsaure Lösung des Farbstoffs färbt Papier in der Masse in brillantgelbem Farbton. Die Lichtechtheit der Papierfärbung ist gut. $\lambda_{max}$ 412 nm (0,01 g/l 5 %iger Essigsäure). Bei der Massefärbung nach Anwendungsbeispiel 3 erhält man rotstichig gelbes Papier, das gut lichtecht und ausblutecht ist.

Beispiel 65

In 125 Teile Schwefelsäuremonohydrat werden bei 20 bis 25 °C 12,5 Teile 3-Chlor-4-amino-azobenzol → 2-Phenyl-pyrazolo [5,1-b] chinazolon und 8,2 Teile 4-Methylimidazol eingetragen und darauf in kleinen Portionen 4,2 Teile Paraformaldehyd zugesetzt. Das Gemisch wird 16 Stunden bei 20 bis 25 °C gerührt, dann auf 1 000 Teile Eiswasser ausgetragen und mit 50 %iger Natronlauge auf pH 10 eingestellt (ca. 220 Teile). Die Fällung wird abgesaugt, neutral gewaschen und bei 80 °C getrocknet.

Ausbeute : 15,9 Teile einer Mischung, die aus mono-imidazolylmethyliertem Diazofarbstoff der Formel

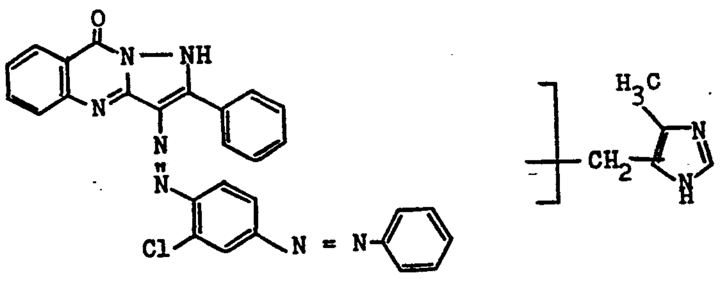

Analyse : $C_{33}H_{24}ClN_9O$ (597,5) ber. Cl 5,94 N 21,08
gef. Cl 5,4 N 20,7

besteht. Die Lösungsfarbe in 5 %iger Essigsäure : rot. $\lambda_{max}$ 471 nm.

Beispiele 66 bis 70

Entsprechend den Angaben in den Beispielen 38 oder 56 werden die in der folgenden Tabelle durch das Amin und die Kupplungskomponente charakterisierten Monoazoverbindungen mit 4-Methylimidazol umgesetzt und die Farbstoffe isoliert. Die Zahl der Imidazolylmethylengruppen ist in Spalte 4 angegeben. Die Lösungsfarbe in 30 %iger Essigsäure ist in Spalte 5 und das Absorptionsmaximum in Spalte 6 angegeben.

(Siehe Tabelle Seite 18 f.)

| Beispiel | Amin | Kupplungskomponente | n | Lösungsfarbe in 10 %iger Essigsäure | $\lambda_{max}$ [nm] |
|---|---|---|---|---|---|
| 66 | 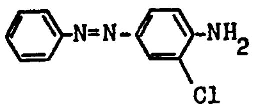 | 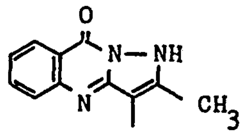 | 1 | orangerot | 462 |
| 67 | 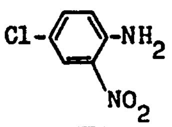 | " | 1 | orange | 473 |
| 68 | 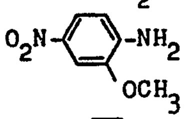 | " | 1 | orange | 462 |
| 69 | 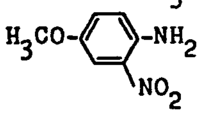 | " | 1 | orange | 396 |
| 70 | 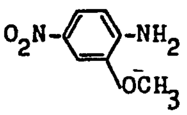 | 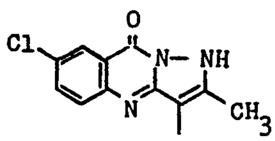 | 1 | orange | 389 1) |

1) gemessen in Lösung von 0,04 g/l 5 %iger Essigsäure

Beispiel 71

In 270 Teile 96 %ige Schwefelsäure werden nebeinander bei 20 °C 20,5 Teile 4-Methylimidazol und 7,5 Teile Paraformaldehyd eingetragen. Die Temperatur wird auf 50 °C erhöht und 2 Stunden gehalten. Darauf werden bei 45 bis 50 °C in kleinen Portionen 16,1 Teile 2-[1,3-Dioxohydrinyl-(2)]-5,6-benzochinolin eingetragen und anschließend die Mischung eine Stunde bei 50 °C gerührt. Die Reaktionslösung wird auf Eiswasser ausgetragen und mit 50 %iger Natronlauge neutralisiert. Der gelbe Niederschlag wird abgesaugt und salzfrei gewaschen.

Ausbeute : 33 Teile imidazolylmethyliertes 2-[1,3-Dioxohydrinyl-(2)]-5,6-benzochinolin mit n = 1.

Analyse : $C_{27}H_{20}N_3O_2$ (417) ber. N 10,07
gef. N 10,3

$\lambda_{max}$ 418 nm.

Wird das gelbe Farbstoffpulver in verdünnter Essigsäure gelöst und nach den Angaben in den Anwendungsbeispielen 1, 2 oder 3 zur Papiermassefärbung eingesetzt, dann werden stark gelbgefärbte Papiere erhalten. Das Abwasser ist farblos.

Beispiel 72

Es wird wie in Beispiel 71 verfahren, wobei anstelle von 4-Methylimidazol 1-Methylimidazol verwendet wird. Das Gemisch wird 5 Stunden auf 40 °C, dann 12 Stunden bei 60 °C gehalten und dann wie in Beispiel 71 aufgearbeitet. Ausbeute : 18 Teile des Farbstoffs der Formel

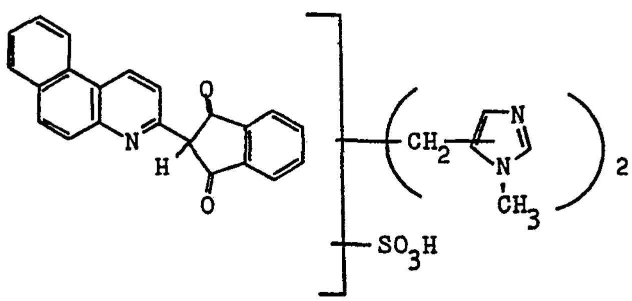

Lösungsfarbe in verdünnter Essigsäure : gelb ; $\lambda_{max}$ 418 nm.

Beispiel 73

In 100 Teile 96 %ige Schwefelsäure werden 65 Teile 2-[1,3-Dioxo-hydrindyl-(2)]-5,6-benzo-chinolin bei 15 bis 20 °C eingetragen und gelöst. Dazu werden in kleinen Portionen 72 Teile 4-Methyl-5-hydroxymethyl-imidazol (82,6 %ig) eingetragen. Die Mischung wird 2 Stunden bei 20 bis 25 °C und 3 Stunden bei 50 °C gerührt und darauf auf Eis und Wasser ausgetragen und mit 50 %iger Natronlauge bei 10 bis 15 °C neutralisiert, abgesaugt und salzfrei gewaschen und getrocknet.

Ausbeute : 99 Teile Gemisch von imidazolylmethyliertem 2-[1,3-Dioxohydrindyl-(2)]-5,6-benzo-chinolin mit n = 1 und 2 ; n̄ = 1,3 ; $\lambda_{max}$ 408 nm.

Der gelbe Farbstoff entspricht in den koloristischen Eigenschaften auf Papier dem Farbstoff von Beispiel 71. Das Abwasser ist farblos.

Bei der Anwendung gemäß Anwendungsbeispiel 3 erhält man gelbes Papier, das eine hohe Farbstärke, hohe Brillanz und gute Ausblutechtheiten aufweist.

Beispiel 74

In 275 Teile 96 %ige Schwefelsäure werden 20,5 Teile 4-Methylimidazol und 7,5 Teile Paraformaldehyd 2 Stunden bei 50 °C gerührt, darauf auf 20 bis 25 °C gekühlt. In die Mischung werden 28,7 Teile 2-[1,3-Dioxo-4,7-dichlor-5,6-dithiophenyl-hydrindyl-(2)]-chinolin eingetragen und 2 Stunden bei 50 °C und 16 Stunden bei 20 bis 25 °C gerührt. Die Säurelösung wird auf Eiswasser ausgetragen, die Lösung unter Kühlen mit 50 %iger Natronlauge neutralisiert. Die Fällung wird abgesaugt, mit Wasser salzfrei gewaschen und bei 50 °C im Vakuum getrocknet.

Ausbeute : 46 Teile gelbes Pulver. Der Farbstoff enthält 2 Imidazolylmethylengruppen.

Bei der Massefärbung von Papier erhält man ungefärbtes Abwasser.

Beispiel 75

In 1 200 Teile 96 %ige Schwefelsäure werden unter Kühlung gleichzeitig bei 10 bis 15 °C 25,5 Teile 4-Methylimidazol und 9 Teile Paraformaldehyd eingetragen, eine Stunde bei 30 bis 35 °C gerührt und in kleinen Portionen dann 59 Teile Cl Pigmentviolett 32 (C.I. No. 51 319) zugefügt. Die Mischung wird 5 Stunden bei 30 bis 35 °C gerührt, auf Eiswasser ausgetragen und die Lösung mit 50 %iger Natronlauge neutralisiert. Die violette Fällung wird mit Wasser salzfrei gewaschen und bei 80 °C getrocknet.

Ausbeute : 96 Teile Farbstoff, der eine Mischung aus Farbstoffen mit n = 1 und 2 ist.

Der Farbstoff löst sich in verdünnter Essigsäure oder Milchsäure mit violetter Farbe ; $\lambda_{max}$ 570 nm. Aus dieser Lösung wird Papierstoff nach dem Anwendungsbeispiel 1 in kräftigen blauvioletten Tönen gefärbt. Das Abwasser ist farblos. Die Ausblutechtheiten sind sehr gut.

Beispiel 76

In 270 Teile 96 %ige Schwefelsäure werden bei 20 bis 25 °C 20,5 Teile 4-Methyl-imidazol, darauf in kleinen Portionen 7,5 Teile Paraformaldehyd eingetragen. Die Mischung wird 2 Stunden bei 50 °C gerührt, abgekühlt und bei 15 bis 20 °C 16,7 Teile 3-(Benzimidazolyl-2')-7-diäthylaminocumarin (hergestellt nach DE-AS 10 98 125, Beispiel 2) eingetragen und 8 Stunden bei 15 bis 20 °C nachgerührt. Die Mischung wird auf Eiswasser ausgetragen und bei 0 bis 30 °C mit verdünnter Natronlauge neutralisiert. Die Fällung wird abgesaugt, salzfrei gewaschen und getrocknet.

Ausbeute : 25 Teile imidazolylmethyliertes 3-(Benzimidazolyl-2')-7-diäthylamino-cumarin ; n = 1.

Analyse : $C_{25}H_{24}N_5O_2$ (440) ber. N 15,9 %
gef. N 15,6 %

$\lambda_{max}$ 475 nm.

In der Dünnschichtchromatographie auf Kieselgelplatten, Schichtdicke 0,25 mm, und einem Lösungsmittelgemisch aus 5 Teilen Chloroform, 2 Teilen Eisessig und 1 Teile Methanol ist der Rf-Wert des Einsatzstoffes 0,99, des imidazolylmethylierten Produktes 0,1. Der erhaltene Farbstoff enthält kein Ausgangsprodukt mehr.

Bei der Papiermassefärbung nach dem Anwendungsbeispiel 2 erhält man gelb gefärbtes Papier, das gut ausblutecht ist.

Beispiel 77

In 270 Teilen 96 %ige Schwefelsäure werden gleichzeitig 21,5 Teile 4-Methylimidazol und 7,5 Teile Paraformaldehyd bei 10 bis 15 °C eingetragen und eine Stunde bei 35 bis 40 °C nachgerührt. Bei 20 °C werden 20,6 Teile Monoazoverbindung 2,5-Dichloranilin → N-Phenyl-äthyl-2-hydroxy-3-cyan-4-methylpyridon-(6) eingetragen und 18 Stunden bei 20 bis 25 °C gerührt. Die Mischung wird auf Eiswasser ausgetragen und mit verdünnter Natronlauge neutralisiert. Die Fällung wird abgesaugt, mit wenig Wasser gedeckt und getrocknet.

Ausbeute : 48 Teile Farbstoff (salzhaltig).

Der Farbstoff löst sich in verdünnter Essigsäure mit gelber Farbe ; $\lambda_{max}$ 423 nm.
Papier wird in der Masse mit dem imidazolylmethylierten Produkt in klarem, gelbem Farbton gefärbt.

Beispiel 78

In 270 Teile 96 %ige Schwefelsäure werden unter Kühlung bei 10 bis 15 °C nebeneinander 12,8 Teile 4-Methylimidazol und 4,5 Teile Paraformaldehyd eingetragen und 2 Stunden bei 40 °C gerührt. Darauf werden in Portionen 15,4 Teile des nach der DE-OS 24 28 198, Beispiel 1, hergestellten Kondensationsproduktes aus Naphtholactam und N,N'-Dimethylbarbitursäure eingetragen und 3 Stunden die Temperatur bei 40 °C gehalten. Die Lösung wird auf Eiswasser ausgetragen, mit Ammoniak neutralisiert, die Fällung abgesaugt, ausgewaschen und getrocknet.

Ausbeute : 23 Teile des Farbstoffs der Formel

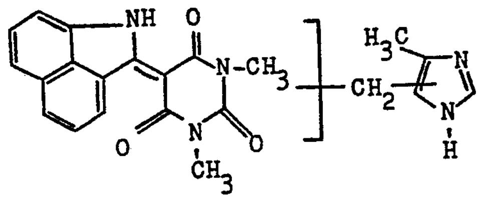

Analyse : $C_{22}H_{19}N_5O_3$ (401) ber. N 17,6 %
gef. N 17,4 %

Der Farbstoff löst sich in verdünnter Essigsäure gelb.

Beispiel 79

In 270 Teile 96 %ige Schwefelsäure werden 17,1 Teile 4-Methylimidazol und 6 Teile Paraformaldehyd bei 10 bis 15 °C eingetragen und bei 40 °C 2 Stunden gerührt. In Portionen werden 20,8 Teile des nach der DE-A 24 28 198, Beispiel 7, hergestellten Kondensationsproduktes aus 4-Phenylmercaptonaphtholactam-(1,8) und N,N'-Dimethylbarbitursäure in Portionen zugefügt und bei 40 °C bis zur vollständigen Umsetzung gerührt. Die Lösung wird auf Eiswasser ausgetragen, mit 25 %igem Ammoniak unter Kühlung neutralisiert, die Fällung abgesaugt, ausgewaschen und bei 50 °C getrocknet.

Ausbeute : 35 Teile des Farbstoffs der Formel

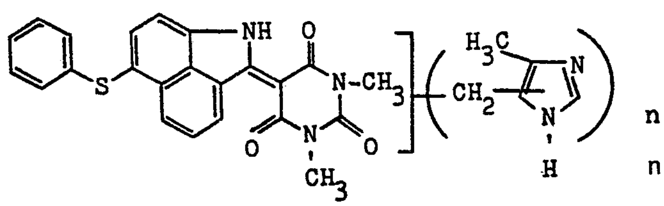

n = 2

Analyse : $C_{33}H_{26}N_7O_3S$ (603) ber. N 16,35 S 5,3 %
gef. N 15,3 S 5,4 %

$\lambda_{max}$ 475 nm.

Der Farbstoff gibt aus essigsaurer Lösung beim Färben von Papier in der Masse nach dem Anwendungsbeispiel 1 rotes Papier, das gute Naßechtheiten aufweist.

Beispiel 80

In 270 Teile 96 %ige Schwefelsäure werden 12,8 Teile 4-Methylimidazol und 4,5 Teile Paraformaldehyd bei 10 bis 15 °C eingetragen und 2 Stunden bei 40 °C gerührt. Bei dieser Temperatur werden 26,2 Teile eines Kondensationsproduktes von 1,4-Diphenyl-mercaptonaphtholactam-(1,8) und N,N'-Dimethylbarbitursäure (hergestellt nach DE-A 24 28 198) in Portionen zugefügt und 1 Stunde bei 40 °C verrührt. Die Lösung wird auf Eis ausgetragen und wie in Beispiel 1 aufgearbeitet.

Ausbeute : 48 Teile des Farbstoffs der Formel

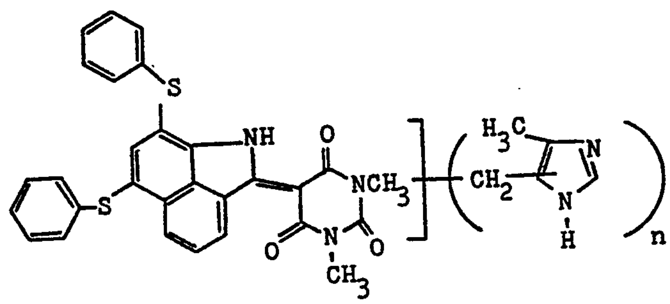

n = 2

Analyse : $C_{39}H_{34}N_7O_3S_2$ (711) (n = 2) ber. N 13,78 %
gef. N 13,8 %

$\lambda_{max}$ 506 nm (in 0,03 g/l Lösung in 5 %iger Essigsäure).

Der Farbstoff gibt aus essigsaurer Lösung beim Färben von Papier in der Masse nach dem Anwendungsbeispiel 1 rotgefärbtes Papier, das gute Naßechtheit aufweist. Das Abwasser ist farblos.

Beispiel 81

In 250 Teile Schwefelsäuremonohydrat werden bei 10 bis 15 °C 20,5 Teile Farbstoff 4-Amino-3,2'-dimethylazobenzol → 1-Phenyl-3-methyl-5-pyrazolon und 16,4 Teile 4-Methylimidazol eingetragen. Darauf werden in kleinen Portionen in 30 Minuten 8,3 Teile Paraformaldehyd eingestreut und das Gemisch 20 Stunden bei 20 bis 25 °C gerührt, auf 2 000 Teile Eiswasser ausgefällt, mit 50 %iger Natronlauge auf pH 9 bis 10 eingestellt, abgesaugt und mit Wasser gewaschen.

Ausbeute : 25 Teile des mono-imidazolylmethylierten Disazofarbstoffs der Formel

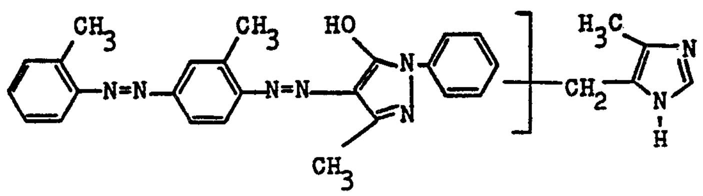

Analyse : $C_{28}H_{26}N_8O$ (490) ber. N 22,8 %
gef. N 22,6 %

Mit diesem Farbstoff werden aus essigsaurer Lösung nach den Anwendungsbeispielen 1 bis 3 brillante gelbstichigorangene Papierfärbungen von hoher Farbstärke und sehr geringer Abwasseranfärbung erhalten.

Bei der Massefärbung nach Anwendungsbeispiel 1 erhält man brillante und farbstarke gelbstichig orange gefärbtes Papier mit guten Ausblutechtheiten.

Beispiel 82

Man arbeitet, wie im Beispiel 81 angegeben, verwendet jedoch als Farbstoff 19,1 Teile 4-Aminoazobenzol → 1-Phenyl-3-methyl-5-pyrazolon. Ausbeute : 26,8 Teile Farbstoff der Formel

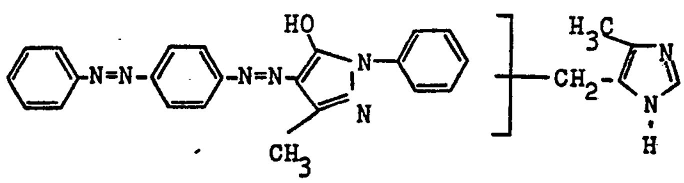

Analyse : $C_{27}H_{23}N_8O$ (475) ber. N 23,5 %
gef. N 22,5 %

Das coloristische Verhalten entspricht dem des Farbstoffs aus Beispiel 81.

Bei der Massefärbung von Papier nach Anwendungsbeispiel 2 erhält man farbstarkes gelbstichig orange gefärbtes Papier mit guten Ausblutechtheiten.

Beispiel 83

In 130 Teile 96 %ige Schwefelsäure werden gleichzeitig 4,5 Teile Paraformaldehyd und 13,8 Teile 1-Butyl-2-methyl-imidazol bei 5 bis 10 °C eingetragen und eine Stunde bei 20 °C verrührt. Darauf werden 10 Teile Farbstoff 4-Amino-azobenzol → 1-Phenyl-3-methyl-5-pyrazolon in kleinen Portionen eingetragen. Das Reaktionsgemisch wird 15 Stunden bei 20 bis 25 °C und 6 Stunden bei 40 °C gerührt, darauf auf Eiswasser ausgetragen und mit 50 %iger Natronlauge auf pH 10 gestellt. Die Fällung wird abgesaugt, neutral gewaschen und bei 80 °C getrocknet. Ausbeute : 14,9 Teile Farbstoff der Formel

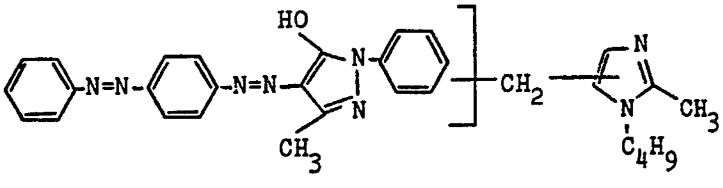

Lösungsfarbe in 5 %iger Essigsäure : gelb.

$\lambda_{max}$ 417 (gemessen in 0,01 g/l 5 %iger Essigsäure).

## Beispiel 84

In 130 Teile 96 %ige Schwefelsäure werden gleichzeitig 9,7 Teile 1,2-Dimethylimidazol und 4,2 Teile Paraformaldehyd bei 5 bis 10 °C eingetragen und 30 Minuten gerührt. Darauf werden 12,5 Teile Farbstoff 3-Chlor-4-aminoazobenzol → 2-Phenylpyrazolo [5,1-b] chinazolon in kleinen Portionen eingetragen. Das Reaktionsgemisch wird 6 Stunden bei 40 bis 45 °C und 5 Stunden bei 60 °C gerührt ; darauf wird auf 1 000 Teile Eiswasser ausgetragen und die entstandene Lösung mit 25 %igem Ammoniakwasser auf pH 7,5 eingestellt. Die Fällung wird abgesaugt, salzfrei gewaschen und bei 80 °C getrocknet.

Ausbeute : 17,5 Teile Disazofarbstoff der Formel :

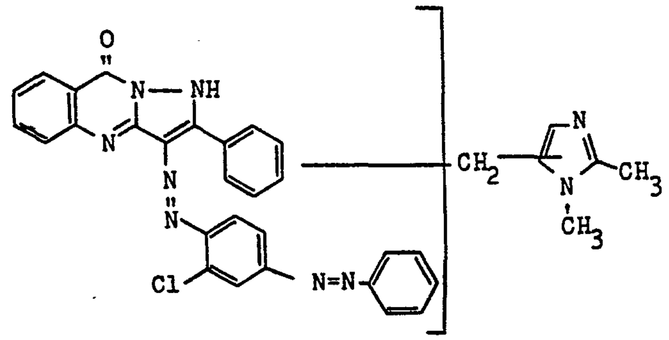

Analyse : $C_{34}H_{26}ClN_9O$ (M 611,5) ber. N 23,5 Cl 5,8 %
gef. N 20,6 Cl 5,3 %

Die Lösungsfarbe in 5 %iger Essigsäure : orangerot ;
$\lambda_{max}$ 461 nm.

## Beispiel 85

In 130 Teile 96 %ige Schwefelsäure werden gleichzeitig 10,9 Teile 2-Ethyl-4-methylimidazol und 4,2 Teile Paraformaldehyd bei 20 bis 25 °C eingetragen und 30 Minuten gerührt. Darauf werden 12,5 Teile 3-Chlor-4-amino-azobenzol → 2-Phenylpyrazolo [5,1-b] chinazolon in kleinen Portionen eingetragen. Die Mischung wird bei 20 bis 25 °C 72 Stunden gerührt und dann wie im Beispiel 84 angegeben isoliert.

Ausbeute : 20,1 Teile des Disazofarbstoffs der Formel

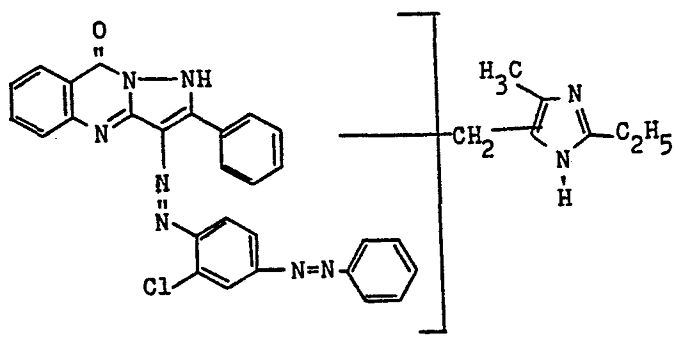

$\lambda_{max}$ 455 nm.

## Beispiel 86

In 165 Teile 96 %ige Schwefelsäure werden nebeneinander bei 0 bis 15 °C 21,3 Teile 4-Methylimidazol und 7,5 Teile Paraformaldehyd eingetragen und eine Stunde bei 40 °C gerührt. Nach dem Abkühlen auf 0 bis 5 °C werden 30,6 Teile 2,6-Dichlor-4-nitro-anilin → Aminohydrochinondimethylether → 2-Diethylamino-4-phenylthiazol-1,3 eingetragen und 30 Stunden bei 20 bis 25 °C und 6 Stunden bei 30 bis 35 °C gerührt.

Das Reaktionsgemisch wird auf Eiswasser ausgetragen, die gelösten Anteile durch Zugeben von 25 %igem Ammoniak bis zum Neutralpunkt gefällt ; die Fällung abgesaugt, gewaschen und getrocknet.

Ausbeute : 33,0 Teile des Disazofarbstoffs der Formel

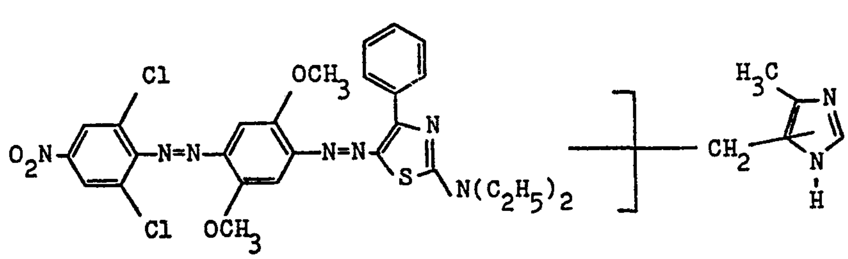

Lösungsfarbe in verdünnter Essigsäure : rotstichig blau.

Beispiel 87

In 165 Teile 96 %ige Schwefelsäure werden nebeneinander bei 0 bis 15 °C 21,3 Teile 4-Methylimidazol und 7,5 Teile Paraformaldehyd eingetragen und eine Stunde bei 40 °C gerührt. Nach dem Abkühlen auf 30 °C werden 25,3 Teile C.I. Basic Blue 26, C.I. No. 44 045 eingetragen und 12 Stunden bei 40 °C gerührt.

Das Reaktionsgemisch wird auf Eiswasser ausgetragen und der Farbstoff mit 25 %igem Ammoniak gefällt. Die Fällung wird filtriert, salzfrei gewaschen und bei 50 °C getrocknet.

Ausbeute : 36 Teile des Triphenylmethanfarbstoffs der Formel :

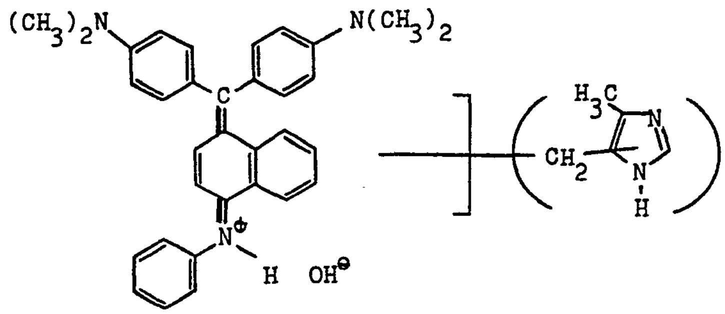

Analyse : $C_{38}H_{39}N_5O$ (M 581) ber. N 12,0 %
gef. N 12,1 %

Die essigsaure Lösung ist blau ; $\lambda_{max}$ 614 nm. Bei der Massefärbung von Papier erhält man blaue Papiere.

Beispiel 88

In 165 Teile 96 %ige Schwefelsäure werden nebeneinander bei 0 bis 15 °C 21,3 Teile 4-Methylimidazol und 7,5 Teile Paraformaldehyd eingetragen und 2 Stunden bei 40 °C gerührt. Nach dem Abkühlen auf 30 °C werden 36,9 Teile C.I. Solvent Dye, C.I. No. 45 195 in kleinen Portionen eingetragen und zunächst eine Stunde bei 40 °C, dann 20 Stunden bei 20 bis 25 °C gerührt.

Das Reaktionsgemisch wird auf Eiswasser ausgetragen und die Lösung mit 25 %igem Ammoniak neutralisiert ; die Fällung wird filtriert und mit Wasser salzfrei gewaschen.

Ausbeute : 42 Teile des Xanthenfarbstoffs der Formel

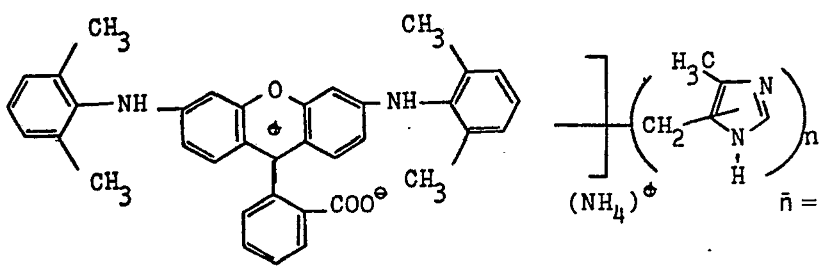

$\bar{n} = 3$

Analyse : $C_{51}H_{48}N_8O_3$ (820) ber. N 13,6 %
gef. N 13,0 %

NMR-Spektrum ($CF_3COOD$) : 2,2 ppm (breites S) ; 2,4 ppm (S), 4,2 ppm (breites S) + Aromatensignale.

Das Absorptionsmaximum in einer ethanolischen 5 %igen Essigsäure : 526 nm.

Nach den Anwendungsbeispielen 1 und 2 werden mit dem Farbstoff aus essigsaurer Lösung brillant rotgefärbte Papiere erhalten. Das Abwasser ist deutlich weniger gefärbt als bei Verwendung des entsprechenden keine Imidazolylmethylengruppen enthaltenden Farbstoffs C.I. No. 45 195.

Beispiel 89

In ein nach Beispiel 88 vorbereitetes Gemisch von 4-Methylimidazol und Paraformaldehyd in Schwefelsäure werden bei 30 °C 25,5 Teile C.I. Solvent Violet 10, C.I. No. 45 190 : 1 in kleinen Portionen eingetragen und 3 Stunden bei 40 °C und darauf 15 Stunden bei 20 bis 25 °C gerührt. Das Gemisch wird wie in Beispiel 88 angegeben aufgearbeitet.

Ausbeute : 32 Teile des Xanthenfarbstoffs der Formel

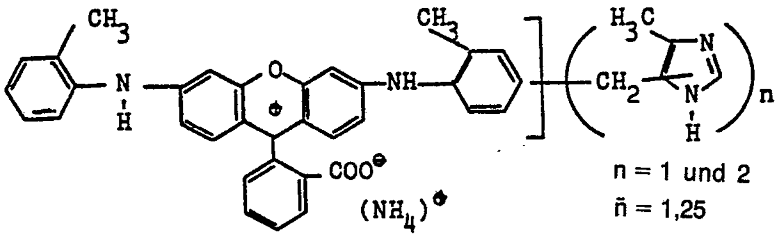

n = 1 und 2
ñ = 1,25

Analyse : $C_{39}H_{31}N_4O_3$ (n = 1) M 603 ber. N 9,28 %
gef. N 10,0 %
$C_{44}H_{38}N_6O_3$ (n = 2) M 697 ber. N 12,05 %.

Die essigsaure Lösung ist rot ; $\lambda_{max}$ 530 nm (in 5 %iger ethanolischer Essigsäure). Bei der Massefärbung von Papier erhält man rote Papiere.

Beispiel 90

In einem nach Beispiel 88 vorbereiteten Reaktionsgemisch von 4-Methylimidazol und Paraformaldehyd in Schwefelsäure werden bei 0 bis 5 °C 30,6 Teile eines Kondensationsproduktes von 2 Mol 2-Chloranilin mit 3,6-Dichlorfluoran in kleinen Portionen eingetragen und darauf 15 Stunden bei 20 bis 23 °C gerührt. Das Gemisch wird wie in Beispiel 88 aufgearbeitet.

Ausbeute : 38 Teile des Xanthenfarbstoffs der Formel :

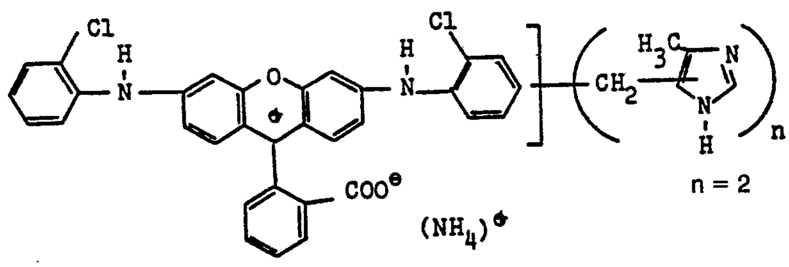

n = 2

Analyse : $C_{42}H_{32}Cl_2N_6O_3$ (M 740) ber. Cl 9,59 %
gef. Cl 9,56 %

Die essigsaure Lösung ist rot. Bei der Massefärbung erhält man rotgefärbtes Papier.

Beispiel 91

a) Man arbeitet, wie in Beispiel 90 angegeben, verwendet jedoch als Farbstoff 31,5 Teile des Kondensationsproduktes von 2 Mol Mesidin mit 3,6-Dichlorfluoran.

Ausbeute : 37 Teile des Farbstoffs der Formel

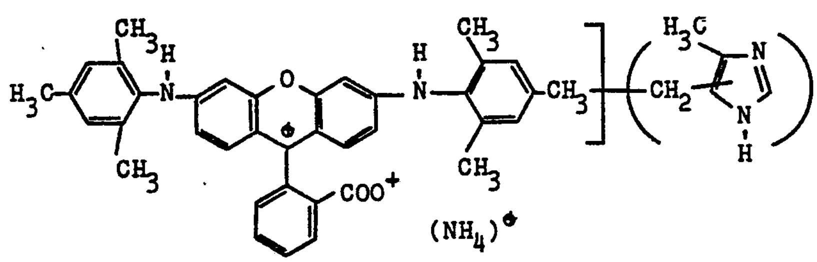

Die essigsaure Lösung ist rot ; $\lambda_{max}$ 528 nm. Aus der essigsauren Lösung werden nach den Anwendungsbeispielen 1 oder 3 brillant rotgefärbte Papiere von hoher Farbstärke erhalten.

b) Mit dem Kondensationsprodukt aus 2 Mol 2,6-Diethylanilin und 3,6-Dichlorfluoran wird durch die Imidazolylmethylierung nach den Angaben des Beispiels 90 ebenfalls ein Farbstoff mit sehr guten Anwendungseigenschaften gefunden.

Beispiel 92

a) 24 Teile 2-(4'-Aminophenyl)-6-methylbenzthiazol werden in salzaurer Lösung mit 7,6 Teilen Natriumnitrit diazotiert.

Die Diazoniumsalzlösung wird einer Lösung, die 39 Teile der nach b) hergestellten Kupplungskomponente der Formel :

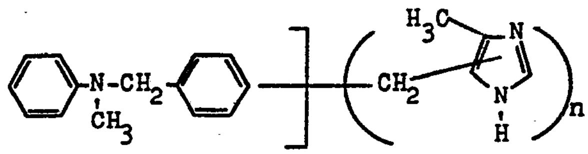

n = 1 und 2

in 400 Teilen Eiswasser und 60 Teilen 30 %iger Essigsäure enthält bei 0 bis 5 °C unter Rühren zugefügt. Der pH-Wert der Mischung wird dann mit Natriumacetatlösung auf 5,5 gestellt. Die Temperatur läßt man innerhalb von 18 Stunden auf 20 bis 25 °C ansteigen. Der sehr feinteilig ausgefallene Farbstoff wird filtriert und das Preßgut durch Zugabe von Eisessig gelöst. Die Lösung wird filtriert und im Filtrat bei 50 bis 60 °C mit 25 %igem Ammoniak der Farbstoff ausgefällt. Der Niederschlag wird filtriert, mit warmen Wasser salzfrei gewaschen und bei 50 °C getrocknet.

Ausbeute : 47,2 Teile eines goldgelben Pulvers.

b) Synthese der Kupplungskomponente :

In 130 Teile 96 %ige Schwefelsäure werden nebeneinander 20,5 Teile 4-Methylimidazol und 10 Teile Paraformaldehyd eingetragen und gerührt. Nach dem Abkühlen auf 0 bis 5 °C werden 19,7 Teile N-Methylbenzanilin eingetropft. Das Reaktionsgemisch wird 3 Stunden bei 2 bis 5 °C, 18 Stunden von 5 bis 20 °C und 6 Stunden bei 30 °C gerührt. Dann wird auf Eiswasser ausgetragen und die Lösung mit 25 %igem Ammoniak auf pH 9,0 gestellt. Die Fällung wird mit Butanol aufgenommen, die Butanolphase abgetrennt, diese mit Wasser gewaschen, getrocknet und das Butanol abdestilliert. Der Rückstand wird direkt als Kupplungskomponente verwendet. Der nach a) erhaltene Farbstoff liefert aus essigsaurer Lösung nach den Angaben der Anwendungsbeispiele 1, 2 oder 3 goldgelb gefärbtes Papier. Das Abwasser ist farblos.

## Beispiel 93

In eine Mischung aus 1 167 Teilen 97,5 %iger Schwefelsäure und 115 Teilen Kupferphthalocyanin werden bei 20 bis 35 °C 71,3 Teile Imidazol und 45,3 Teile Paraformaldehyd in Portionen eingetragen. Das Reaktionsgemisch wird dann auf 110 °C erhitzt und 15 Stunden bei dieser Temperatur gerührt. Nach dem Abkühlen wird die Reaktionslösung auf eine Mischung aus 4 000 Teilen Eis und 1 500 Teilen Wasser ausgetragen und die erhaltene Lösung mit 1 900 Teilen 50 %iger Natronlauge auf pH 10 gestellt. Die 50 °C warme Fällung wird auf einer Nutsche abgesaugt, mit Wasser neutral und salzfrei gewaschen und getrocknet. Ausbeute : 153 Teile Farbstoff der Formel

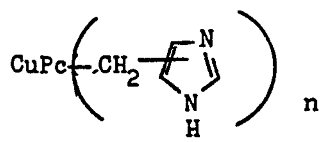

ñ = 2

in Form eines dunkelblauen Pulvers. Der Farbstoff ist ein Gemisch aus Farbstoffen mit n = 1, 2 und 3 und löst sich in 30 %iger Essigsäure mit brillantblauer Farbe. $\lambda_{max}$ 327 und 607 nm.

## Beispiel 94

In eine Mischung aus 1 300 Teilen 100 %iger Schwefelsäure und 115 Teilen Kupferphthalocyanin werden bei 20 bis 35 °C 143,8 Teile 1-Äthylimidazol und 76 Teile Paraformaldehyd eingetragen. Das Gemisch wird langsam auf 110 °C erwärmt und bei dieser Temperatur 12 Stunden gerührt. Die erhaltene Reaktionslösung wird auf 3 000 Teile Eis und 1 000 Teile Wasser ausgetragen. Zu der Lösung werden 900 Teile Natriumchlorid und 150 Teile Zinkchlorid gegeben und die Suspension nachgerührt. Die Fällung wird filtriert, das Filtergut mit 10 %iger Natriumchloridlösung sulfationenfrei gewaschen und bei 90 °C getrocknet. Ausbeute : 403 Teile Farbstoff der Formel

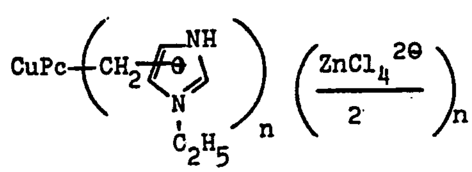

ñ = 3

in Form eines dunkelblauen Pulvers. Das Pulver löst sich in Wasser mit grünstichig blauer Farbe. $\lambda_{max}$ 331 und 625 nm.

Beispiel 95

In 200 Teile 100 %ige Schwefelsäure werden 14,3 Teile Kobaltphthalocyanin, 15,9 Teile 1-Äthylimidazol und 7,2 Teile Paraformaldehyd eingetragen und 20 Stunden bei 100 bis 105 °C gerührt. Die abgekühlte Reaktionslösung wird auf Eiswasser ausgetragen und das Umsetzungsprodukt durch Zugeben von 350 Teilen 50 %iger Natronlauge gefällt. Die Fällung wird abfiltriert, mit Wasser gewaschen und getrocknet. Ausbeute : 13,4 Teile des Farbstoffs der Formel

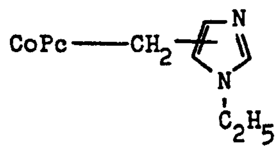

Die Lösungsfarbe in Propionsäure ist grünstichig blau.

Aus 14,3 Teilen Nickelphthalocyanin werden bei der gleichen Arbeitsweise 21,5 Teile der entsprechenden Nickelphthalocyaninverbindung erhalten.

Beispiel 96

In eine Mischung aus 1 670 Teilen 0,5 %igem Oleum und 115 Teilen Kupferphthalocyanin werden bei 20 bis 35 °C nebeneinander 86 Teile 1-Methylimidazol und 45,4 Teile Paraformaldehyd eingetragen und eine Stunde gerührt. Das Reaktionsgemisch wird dann auf 100 °C erwärmt und 18 Stunden bei dieser Temperatur gerührt. Nach dem Abkühlen wird das Reaktionsgemisch auf Eiswasser ausgetragen und die Lösung mit Natronlauge auf pH 10 bis 11 gestellt. Die Fällung wird abgesaugt, neutral gewaschen und getrocknet. Ausbeute : 144 Teile des Farbstoffs der Formel

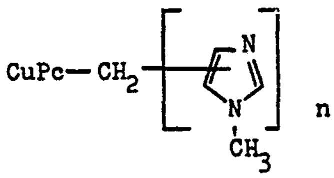

$\bar{n} = 1{,}5$

in Form eines dunkelblauen Pulvers. Die Lösungsfarbe in 30 %iger Essigsäure ist brillantblau. $\lambda_{max}$ 325 und 607 nm.

Beispiel 97

In 160 Teile 98 %iger Schwefelsäure werden 10,3 Teile metallfreies Phthalocyanin und 17,9 Teile 4-Methyl-5-hydroxymethylimidazol-hydrochlorid eingetragen und das Gemisch langsam auf 80 °C erwärmt und 2 Stunden bei 80 °C gerührt. Die Isolierung erfolgt durch Austragen auf Wasser und Fällung des Farbstoffs mit Natronlauge entsprechend Beispiel 4. Ausbeute : 3,6 Teile des Farbstoffs der Formel

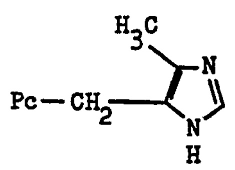

in Form eines blauen Pulvers. Die Lösungsfarbe in verdünnter Propionsäure ist lindgrün.

Beispiel 98

Man verfährt wie in Beispiel 97, verwendet jedoch anstelle von metallfreiem Phthalocyanin 11,4 Teile Eisenphthalocyanin und rührt 5 Stunden bei 80 °C. Man erhält 7,6 Teile der entsprechenden Eisenphthalocyaninverbindung, die in verdünnter Essigsäure eine blaugrüne Lösung gibt.

Beispiel 99

In 200 Teile 100 %ige Schwefelsäure werden 15,3 Teile Kupferphthalocyanin, 7,1 Teile Paraformaldehyd und 22,5 Teile 1-Butyl-2-methyl-imidazol eingetragen, eine Stunde bei 20 bis 30 °C und dann 18

Stunden bei 100 °C gerührt. Nach dem Austragen auf Eiswasser, Alkalischtellen mit Natronlauge, wird der Farbstoff abfiltriert, mit Wasser salzfrei gewaschen und getrocknet. Ausbeute : 21,5 Teile des Farbstoffs der Formel

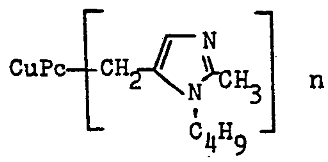

ñ = 2

eines rotstichig blauen Pulvers. Die Lösungsfarbe in 20 %iger Essigsäure : brillantblau.

Beispiel 100

Eine Mischung aus 200 Teilen 100 %iger Schwefelsäure, 14,3 Teilen Kupferphthalocyanin, 27,25 Teilen 2-Isopropylimidazol und 12,75 Teilen Paraformaldehyd werden eine Std. bei 30 bis 35 °C und 24 Stunden bei 100 °C gerührt. Die Isolierung erfolgt entsprechend den Angaben im Beispiel 4. Ausbeute : 21,8 Teile des Farbstoffs der Formel

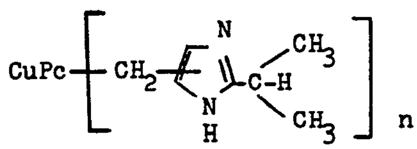

ñ = 2

Die Lösungsfarbe in 20 %iger Propionsäure : brillantblau.

Werden anstelle von 2-Isopropylimidazol 24 Teile 1,2 Dimethylimidazol verwendet, werden 29,9 Teile des entsprechenden Bis-(dimethylimidazolmethylen-)Kupferphthalocyanins erhalten.

Beispiel 101

Ein Gemisch aus 200 Teilen 100 %iger Schwefelsäure, 15,3 Teilen Kupferphthalocyanin, 15,3 Teilen 1-Vinylimidazol und 7,1 Teilen Paraformaldehyd werden 18 Stunden bei 100 °C gerührt. Das Reaktionsgemisch wird entsprechend Beispiel 96 aufgearbeitet. Ausbeute : 20 Teile eines hellblauen, in verdünnter Essigsäure leicht löslichen Farbstoffs.

Beispiel 102

Ein Gemisch aus 250 Teilen 5 %igem Oleum, 16,6 Teilen Dibenzopyrenchinon, 24 Teilen 1-Äthylimidazol und 12,8 Teilen Paraformaldehyd werden 16 Stunden bei 20 bis 30 °C und dann 10 Stunden bei 80 °C und 8 Stunden bei 90 °C gerührt. Das Reaktionsgemisch wird auf Eiswasser ausgetragen, die Fällung abgesaugt, mit Wasser ausgewaschen und getrocknet.

Ausbeute : 25 Teile des Farbstoffs der Formel

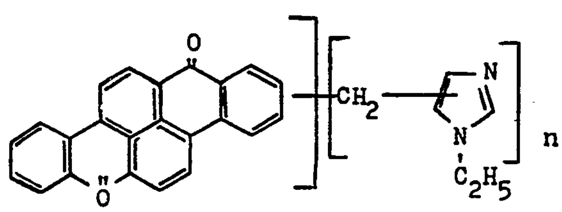

ñ = 1,2, d. h. eine Mischung aus n = 1 und n = 2.

Lösungsfarbe in verdünnter Essigsäure : gelbbraun.

Beispiel 103

In 250 Teile 5 %iges Oleum werden in Portionen 20,3 Teile Pyranthron, 24 Teile 1-Äthylimidazol und 12,8 Teile Paraformaldehyd eingetragen. Die Mischung wird 16 Stunden bei 20 bis 25 °C und 12 Stunden bei 80 °C gerührt. Nach dem Abkühlen wird die Reaktionsmischung auf Eiswasser ausgetragen, das

Gemisch mit 395 Teilen 50 %iger Natronlauge auf pH 7,0 gestellt. Die Fällung wird abgesaugt, mit Wasser ausgewaschen und getrocknet.

Ausbeute : 33 Teile des Farbstoffs der Formel

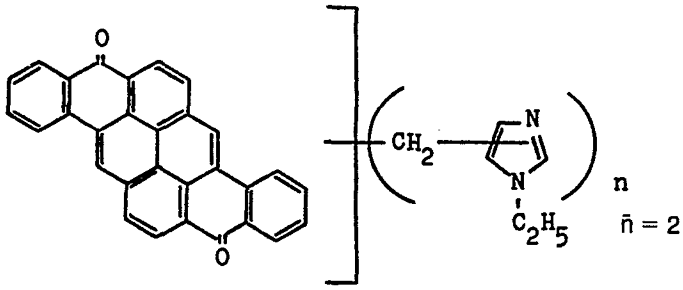

10,3 Teile des trocknen Pulvers werden in 100 Teile Dioxan bei 50 °C 10 Stunden mit 2,8 Teilen Dimethylsulfat quaterniert. Die quartäne Ammoniumverbindung wird aus der Lösung durch Abdestillieren des Lösungsmittels isoliert.

Ausbeute : 14 Teile. Das Produkt ist leicht in Wasser löslich.

Beispiel 104

In eine Mischung aus 500 Teilen 85 %iger Phosphorsäure und 197,5 Teilen Phosphorpentoxid werden bei 25 bis 30 °C 22,3 Teile 1,4-Bis-phenyläthylaminoanthrachinon und 28,1 Teile 4-Methyl-5-hydroxymethylimidazol eingetragen und das Gemisch 8 Stunden bei 60 bis 65 °C und 2 Stunden bei 110 °C gerührt. Nach dem Abkühlen wird auf Wasser ausgetragen und das Reaktionsprodukt mit Natronlauge ausgefällt und abgesaugt. Das Filtergut wird mit 10 %iger Sodalösung angerieben, abgesaugt und neutral gewaschen.

Ausbeute : 21 Teile des Farbstoffs der Formel

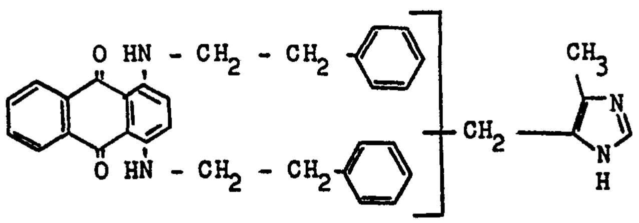

In verdünnter Essigsäure erhält man eine blaue Lösung.

Beispiel 105

In 250 Teile 98 bis 99 %ige Schwefelsäure wird eine Mischung aus 22,2 Teilen Indanthron und 18,6 Teilen 4-Methyl-5-hydroxymethylimidazol bei 50 bis 65 °C eingetragen. Das Gemisch wird 2 Stunden bei 60 bis 65 °C, 6 Stunden bei 70 °C und 15 Stunden bei 80 °C gerührt. Nach dem Abkühlen wird das Reaktionsgemisch auf 1 000 Teile Eiswasser ausgetragen und die Mischung mit 300 Teilen 50 %iger Natronlauge auf pH 10 gestellt. Der Niederschlag wird abgesaugt, neutral gewaschen und getrocknet.

Ausbeute : 30 Teile des Farbstoffs der Formel

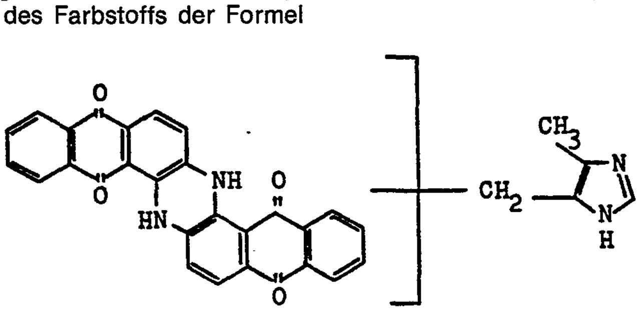

Der Farbstoff löst sich in verd. Essigsäure mit dunkelblauer Farbe.

Beispiel 106

Eine Mischung aus 250 Teilen 5 %igem Oleum, 23,2 Teilen Perylentetracarbonsäuredimethylimid, 12,8

Teilen Paraformaldehyd und 24 Teilen 1-Äthylimidazol werden 12 Std. bei 20 bis 25 °C und 12 Stunden bei 100 °C gerührt. Die Farbstofflösung wird auf Eiswasser ausgetragen, mit 50 %iger Natronlauge auf pH 7,0 gestellt, die Fällung abgesaugt, mit Wasser neutral gewaschen und getrocknet.

Ausbeute : 37 g des Farbstoffs der Formel

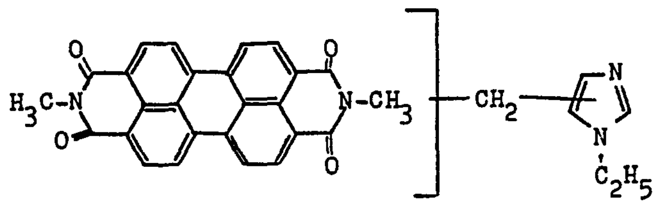

Lösungsfarbe in verdünnter wäßriger Propionsäure : rot.

Beispiel 107

In 250 Teile 98 %ige Schwefelsäure wird eine Mischung aus 13,6 Teilen 4-Methyl-5-hydroxymethylimidazol und 21,4 Teilen des Anthrachinon-bisacridons der Formel (VIII)

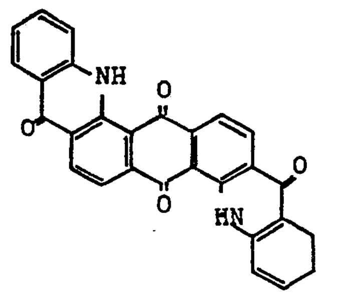

(VIII)

eingetragen und das Gemisch 4 Stunden bei 90 °C gerührt. Nach dem Abkühlen wird das Reaktionsgemisch auf Wasser ausgetragen und das Umsetzungsprodukt durch Zufügen von 430 Teilen 50 %iger Natronlauge gefällt (pH = 10). Die Fällung wird abgesaugt, neutral gewaschen und getrocknet.

Ausbeute : 28 Teile des Farbstoffs

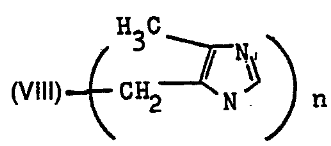

mit n = 1.

Der Farbstoff löst sich in verdünnter Essigsäure mit violetter Farbe. $\lambda_{max}$ 545 nm (0,060 g/l 5 %ige Essigsäure).

Werden anstelle des Bisacridons 16,4 Teile 2-Amino-3,4-phthaloylacridon verwendet und zuerst 3 Stunden bei 60 °C und anschließend 8 Stunden bei 80 °C gerührt, dann isoliert man 21 Teile des Farbstoffs der Formel

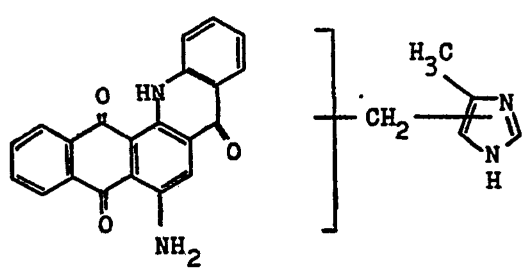

Der Farbstoff löst sich in verdünnter Essigsäure mit blauer Farbe.

Beispiel 108

In 190 Teilen 96 %iger Schwefelsäure wird eine Mischung aus 18,8 Teilen 8,9 Pthaloyl-benz[a]acridon, 11,4 Teilen 4-Methyl-hydroxymethylimidazol eingetragen und das Gemisch 5 Stunden bei 40 bis 45 °C

und 8 Stunden bei 60 bis 65 °C gerührt. Die Isolierung des Farbstoffs erfolgt wie im Beispiel 107 angegeben. Es werden 27,5 Teile des Farbstoffs der Formel

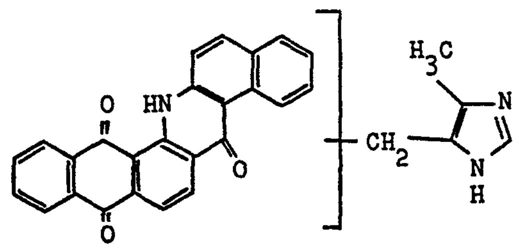

erhalten. Der Farbstoff löst sich in verdünnter Essigsäure mit orangeroter Farbe.

Beispiel 109

Ein Gemisch aus 220 Teilen 99,8 %iger Schwefelsäure, 22,8 Teilen Violanthron, 20,5 Teilen 1-Methylimidazol und 10,5 Teilen Paraformaldehyd werden 18 Stunden bei 100 bis 105 °C gerührt. Die Reaktionslösung wird auf etwa 2 000 Teile Eiswasser ausgetragen, mit 470 Teilen 50 %iger Natronlauge versetzt, abgesaugt, mit Wasser gewaschen und getrocknet. Ausbeute : 40 Teile des Farbstoffs der Formel

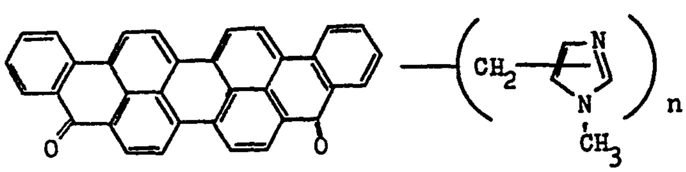

$\bar{n} = 2$

Der Farbstoff löst sich mit marineblauer Lösung in verd. Propionsäure. $\lambda_{max}$ 570 nm.

Beispiel 110

Man arbeitet wie im Beispiel 109, verwendet jedoch anstelle von Violanthron die gleiche Menge Isoviolanthron, dann isoliert man 32,5 Teile des Farbstoffs der Formel

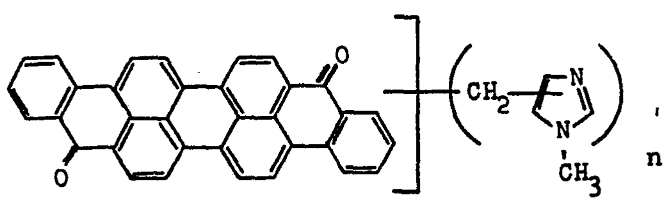

n 1,5 ; d. h. eine Mischung mit n = 1 und n = 2.

Der Farbstoff löst sich mit violetter Farbe in verdünnter Propionsäure. $\lambda_{max}$ 555 nm.

Beispiel 111

Es wird wie im Beispiel 109 gearbeitet, jedoch wird das Violanthron durch 21,1 Teile Benzanthronpyrazolanthron ersetzt und 4 Stunden bei 80 °C und dann 7 Stunden bei 90 °C gerührt. Ausbeute : 31 Teile des Farbstoffs der Formel

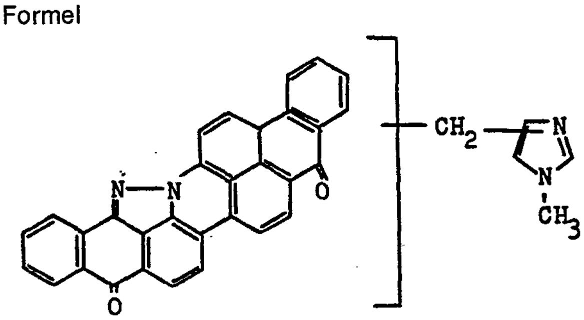

Der Farbstoff löst sich in Essigsäure mit blauer Farbe.

Beispiel 112

In eine Lösung von 23,7 Teilen des Anthrachinonbisthiazols der Formel (IX)

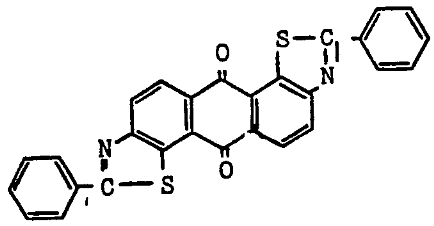

in 210 Teilen 98 %iger Schwefelsäure werden bei 20 bis 30 °C 16,8 Teile 4-Methyl-5-hydroxymethylimidazol eingetragen. Das Reaktionsgemisch wird 2 Stunden bei Raumtemperatur, dann je 7 Stunden bei 80 °C und zuletzt bei 90 °C gerührt. Das abgekühlte Reaktionsgemisch wird Eiswasser eingetragen und das Umsetzungsprodukt durch Neutralisieren mit Natronlauge gefällt. Die Fällung wird filtriert, mit Wasser salzfrei gewaschen und getrocknet. Ausbeute : 34 Teile des Farbstoffs

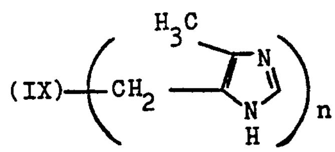

$n \approx 2$.

Der Farbstoff löst sich in verdünnter Essigsäure mit gelber Farbe. $\lambda_{max}$ 266, 305 und 413 nm. Die Hauptabsorptionsbande liegt bei 305 nm.

Beispiel 113

In eine Lösung von 27,2 Teilen der Verbindung der Formel (X)

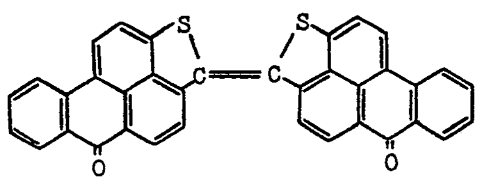

in 300 Teilen Schwefelsäure-monohydrat werden 11,4 Teile 4-Methyl-5-hydroxymethylimidazol eingetragen und die Mischung 7 Stunden bei 100 °C und 12 Stunden bei 115 °C gerührt.

Farbstoff wird in Eiswasser und Natronlauge ausgefällt, neutral gewaschen und bei 80 °C getrocknet.

Ausbeute : 40 Teile des Farbstoffs

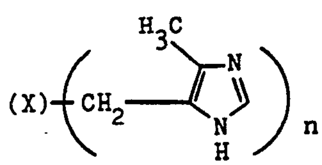

$n \approx 2$.

Der Farbstoff löst sich in Essigsäure mit olivgrüner Farbe.

Beispiel 114

20,6 Teile Naphthoylenbenzimidazol werden zusammen mit 250 Teilen Schwefelsäuremonohydrat und 11,4 Teile 4-Methyl-5-hydroxymethylimidazol 4 Stunden bei 105 °C gerührt. Die Reaktionslösung wird auf Eiswasser und Natronlauge ausgefällt, abgesaugt und salzfrei gewaschen.

Ausbeute : 30,7 Teile des Farbstoffs der Formel

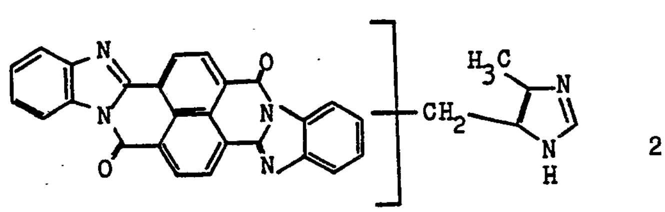

Der Farbstoff löst sich mit orangeroter Farbe in verd. Essigsäure. $\lambda_{max}$ 462 nm.
Analyse : $C_{36}H_{24}N_8O_2$ (600)
ber. N 18,6
gef. N 18,6

Beispiel 115

Bei 55 bis 60 °C werden in 250 Teilen Schwefelsäuremonohydrat eine Mischung bestehend aus 24,5 Teilen Dichlordibromindigo und 23 Teilen 4-Methyl-5-hydroxymethylimidazol in Portionen eingetragen und 6 Stunden bei dieser Temperatur gerührt. Nach dem Abkühlen wird auf Eiswasser ausgetragen, mit Kalilauge alkalisch gestellt, abgesaugt und mit Wasser neutral gewaschen. Ausbeute : 33,3 Teile des Farbstoffs der Formel

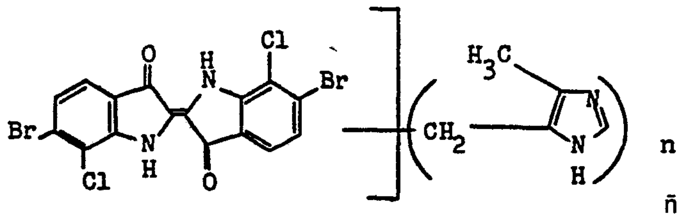

$\bar{n} \approx 2$

Der Farbstoff löst sich in verdünnter Propionsäure mit dunkelblauer Farbe.

Beispiel 116

30 Teile 2,4-Bis-(1-anrhrachinoylamino)-6-phenyl-1,3,5-triazin werden in 240 Teilen 99 %iger Schwefelsäure gelöst und 10,3 Teile 1-Methylimidazol und 4,5 Teile Paraformaldehyd gleichzeitig eingetragen und 10 Stunden bei 90 °C und dann 5 Stunden bei 100 °C gerührt. Nach dem Abkühlen wird auf Eiswasser ausgetragen, mit Natronlauge auf pH 10 eingestellt, die Fällung abgesaugt und mit Wasser ausgewaschen.
Ausbeute : 35 Teile des Farbstoffs der Formel

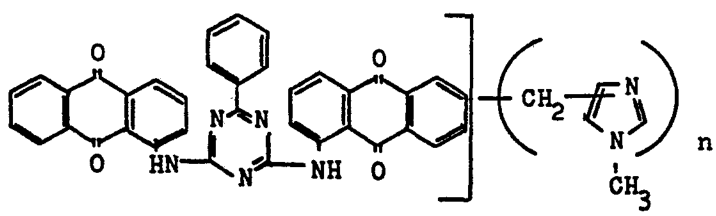

$\bar{n} \approx 2$.

Der Farbstoff löst sich in verdünnter Essigsäure mit gelber Farbe.

Beispiel 117

In 210 Teile 96 %ige Schwefelsäure werden 21 Teile 1,5-Di-p-toluidino-anthrachinon und 13,5 Teile 4-Methyl-5-hydroxy-methylimidazol eingetragen und 30 min bei 20 bis 30 °C, dann 90 min bei 70 °C gerührt. Nach dem Abkühlen wird auf Eiswasser ausgetragen und mit Natronlauge auf pH 10,0 gestellt, die Fällung abgesaugt, neutral gewaschen und getrocknet.
Ausbeute : 27,5 Teile des Farbstoffs der Formel

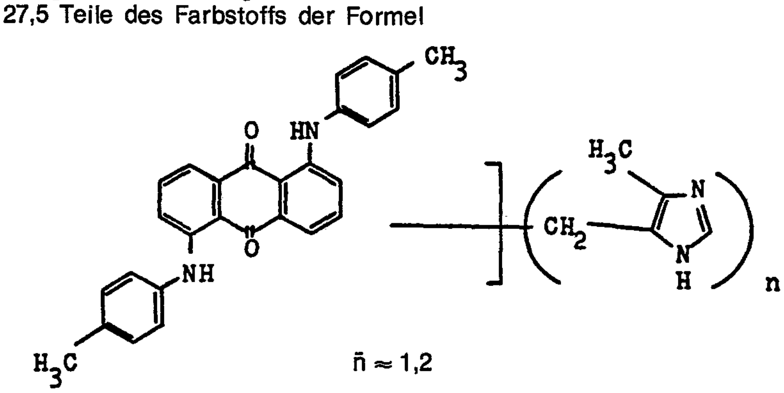

$\bar{n} \approx 1,2$

Der Farbstoff löst sich in 30 %iger Essigsäure mit rubinroter Farbe.

Beispiel 118

Man verfährt wie in Beispiel 117, verwendet jedoch anstelle von 1,5-Di-p-toluidino-anthrachinon 21 Teile 1,4-Di-p-toluidino-anthrachinon und rührt 20 Stunden bei 20 bis 25 °C. Man erhält 28 Teile des Farbstoffs der Formel

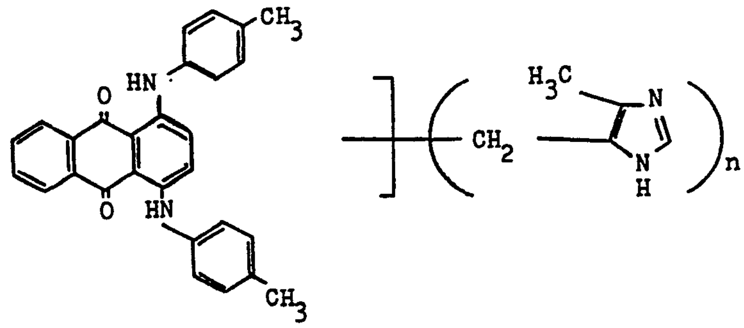

n̄ 3 ; Mischung mit n = 2, 3 und 4.
Der Farbstoff hat in verdünnter Essigsäure eine blaugrüne Lösungsfarbe.

Beispiel 119

Man verfährt wie in Beispiel 117, verwendet jedoch anstelle von 1,5-Di-p-toluidino-anthrachinon 20,4 Teile 1-Amino-2-brom-4p-toluidino-anthrachinon und rührt 6 Stunden bei 40 °C und dann 7 Stunden bei 60 bis 65 °C. Man erhält 30,5 Teile Farbstoff der Formel

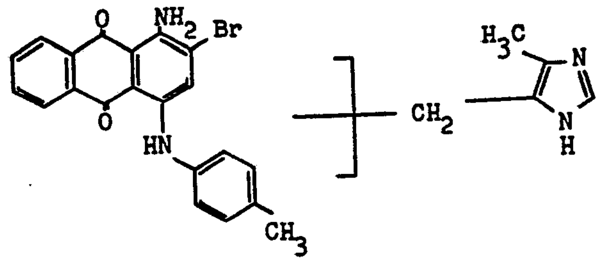

Der Farbstoff löst sich in 30 %iger Essigsäure mit dunkelblauer Farbe.

Beispiel 120

In 210 Teile 98 %ige Schwefelsäure werden in Portionen nebeneinander 23,8 Teile 1,4-Bis-(2'-phenylpropylamino)-anthrachinon und 16,8 Teile 4-Methyl-5-hydroxymethylimidazol eingetragen und gerührt. Nach 20 Std. bei 20 bis 25 °C wird auf Eiswasser ausgetragen und bis zur vollständigen Fällung mit Natronlauge versetzt, die Fällung abgesaugt und neutral gewaschen und bei 60 °C getrocknet.
Ausbeute : 32,2 Teile Farbstoff der Formel

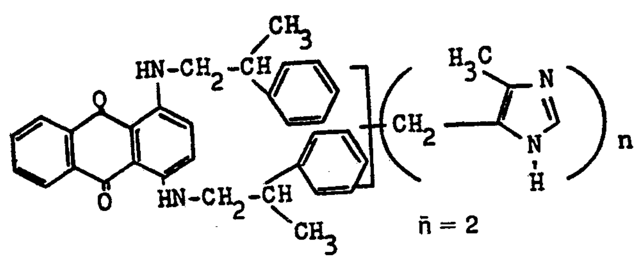

n̄ = 2

Der Farbstoff löst sich in klarer blauer Lösung in verd. Propionsäure.

Beispiel 121

Man arbeitet wie in Beispiel 120, verwendet jedoch anstelle von 1,4-Bis-(2'-phenylpropylamin)-anthrachinon 19,5 Teile 1-Nitro-8-o-toluidino-4,5-dihydroxyanthrachinon und rührt 7 Stunden bei 90 °C und darauf 15 Stunden bei 100 bis 102 °C.

Ausbeute : 28 Teile des Farbstoffs der Formel

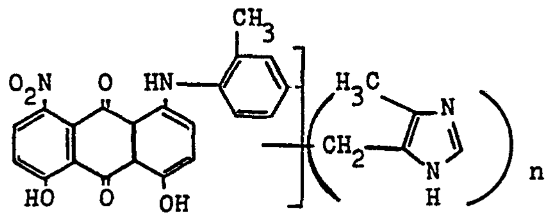

n̄ = 1,8.

Der Farbstoff löst sich in verd. Essigsäure mit blauer Farbe.

Beispiel 122

12,2 Teile AlPc der Formel $C_{32}H_{16}N_8AlCl \cdot 2\ H_2O$, 4,2 Teile Paraformaldehyd und 8,2 Teile 1-Methylimidazol werden unter Rühren nebeneinander in 120 Teilen Schwefelsäuremonohydrat eingetragen und bei 30 °C gelöst. Das Gemisch wird auf 100 °C erwärmt und 15 Stunden bei 100 °C gerührt und darauf abgekühlt, auf Eiswasser ausgefällt, mit Natronlauge auf pH 10 eingestellt, abgesaugt, ausgewaschen und getrocknet.

Ausbeute : 14,5 Teile eines in verdünnter Essigsäure in türkisblauer Farbe löslichen Imidazolylmethylen-aluminiumphthalocyanins.

Beispiel 123

In 420 Teile 96 %ige Schwefelsäure wird bei 20 bis 30 °C eine Mischung aus 29,8 Teilen Thioindigo und 28,2 Teilen 4-Methyl-5-hydroxymethylimidazol eingetragen und einige Stunden bei dieser Temperatur gerührt. Danach wird das Gemisch je 7 Stunden bei 40 °C und bei 60 °C gerührt. Die abgekühlte Lösung wird auf Eiswasser ausgetragen und das Reaktionsprodukt mit 850 Teilen 50 %iger Natronlauge ausgefällt. Die Fällung wird abgesaugt, neutral und salzfrei gewaschen und bei 60 °C getrocknet.

Ausbeute : 45 Teile des Farbstoffs der Formel

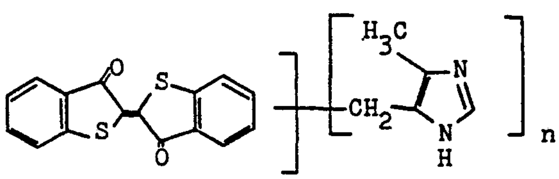

n̄ 1,7, d. h. ein Gemisch mit n = 1 und 2, erhalten.

Beispiel 124

In 210 Teile 98 %iger Schwefelsäure wird eine Mischung aus 19,9 Teilen 1-Amino-2-phenoxy-4-hydroxy-anthrachinon und 21,5 Teilen 4-Methyl-5-hydroxymethylimidazol eingetragen und 20 Stunden bei 20 bis 25 °C gerührt. Das Reaktionsgemisch wird auf 2 000 Teile Eiswasser gegeben und mit 400 Teilen 50 %iger Natronlauge auf pH 10 gestellt, die Fällung abgesaugt und neutral gewaschen.

Ausbeute : 26,5 Teile des Farbstoffs der Formel

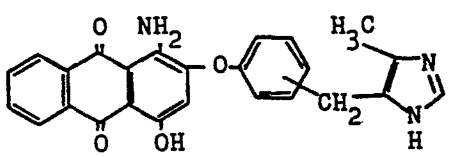

Analyse : $C_{25}H_{18}N_3O_4$ (424) ber. N 9,9 %
gef. N 10,0 %.

Die Lösungsfarbe in verdünnter Essigsäure ist rot.

Beispiel 125

Es wird wie in Beispiel 124 verfahren, jedoch verwendet man anstelle von 1-Amino-2-phenoxy-4-hydroxy-anthrachinon 21,9 Teile 1-Amino-2-(4′-chlorphenyl)-4-hydroxy-anthrachinon und rührt 12 Stunden bei 60 °C.

Ausbeute : 10 Teile des Farbstoffs der Formel

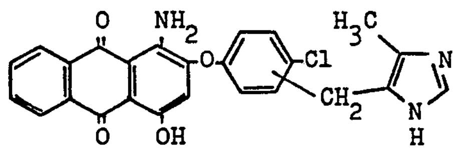

Beispiel 126

Man arbeitet wie in Beispiel 124, verwendet jedoch anstelle von 1-Amino-2-phenoxy-4-hydroxy-anthrachinon 15-Teile 1-Amino-2-thiophenyl-4-hydroxy-anthrachinon und rührt die Mischung 8 Stunden bei 50 °C.

Ausbeute : 20 Teile des Farbstoffs der Formel

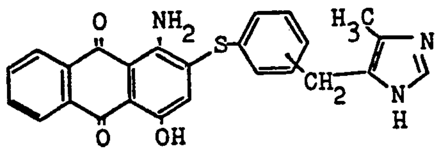

Analyse : $C_{25}H_{18}N_3O_3S$ (440) ber. N 9,54 S 7,2 %
gef. N 9,6 S 7,6 %.

Der Farbstoff löst sich in verdünnter Essigsäure blaustichig rot.

Beispiel 127

Eine Mischung aus 220 Teilen 100 %iger Schwefelsäure, 11,4 Teilen 4-Methyl-5-hydroxymethylimidazol und 22,5 Teilen des Benzanthronderivates der Formel (XI)

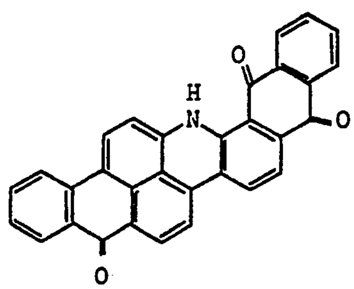

(XI)

wird einige Stunden bei Raumtemperatur und dann 7 Stunden bei 60 bis 70 °C gerührt. Das Reaktionsgemisch wird auf 2 000 Teile Eiswasser gegossen und das Umsetzungsprodukt durch Zugeben von 320 Teilen 50 %iger Natronlauge gefällt (pH 10). Die Fällung wird abgesaugt, neutral gewaschen und bei 110 °C getrocknet.

Ausbeute : 24,1 Teile Farbstoff

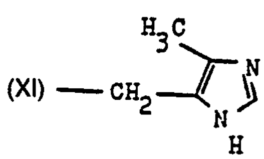

Der Farbstoff löst sich in verdünnter Essigsäure mit blaugrüner Farbe.

Beispiel 128

Eine Mischung aus 220 Teilen 1 %igem Oleum, 20,3 Teilen Acedianthron, 13,6 Teilen 4-Methyl-5-hydroxymethylimidazolwerden eine Stunde bei 30 °C und 2 Stunden bei 90 °C gerührt. Nach dem Abkühlen wird auf Eiswasser ausgetragen und mit Natronlauge neutralisiert. Die Fällung wird agbesaugt, salzfrei gewaschen und getrocknet.

Ausbeute : 24,2 Teile des Farbstoffs der Formel

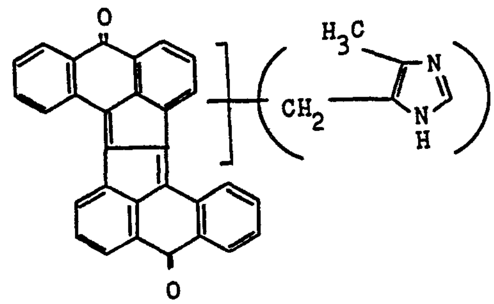

Der Farbstoff löst sich in verdünnter Essigsäure mit gelbbrauner Farbe.

Beispiel 129

Eine Mischung aus 250 Teilen Schwefelsäuremonohydrat, 15 Teilen 4-Methyl-5-hydroxymethylimidazol und 22,5 Teilen 9-(1'-Anthrachinonyl-amino)-benzanthron werden eine Stunde bei 80 °C gerührt. Nach dem Abkühlen wird auf Eiswasser ausgetragen und das Verfahrensprodukt mit Natronlauge gefällt. Die Fällung wird abgesaugt, neutral gewaschen und getrocknet.

Ausbeute : 27 Teile des Farbstoffs der Formel

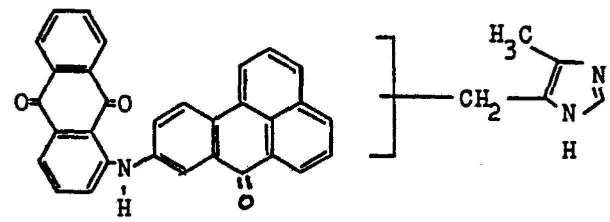

Der Farbstoff löst sich in verd. Essigsäure mit brauner Farbe.

Beispiel 130

45 Teile Wasser, 10 Teile 40 %ige Essigsäure und 16 Teile des in Beispiel 96 erhaltenen Farbstoffs werden auf 45 bis 50 °C erwärmt, bis vollständige Lösung eintritt. Dann werden 5,6 Teile Dimethylsulfat zugegeben und 2 Stunden bei 50 bis 52 °C gerührt. Das überschüssige Dimethylsulfat wird mit verdünntem Ammoniak zerstört. Der Farbstoff wird bei etwa 20 °C durch Zugeben von 119 Teilen Propanol ausgefällt, abgesaugt und mit wenig Aceton nachgewaschen.

Ausbeute : 21 Teile quartäre Ammoniumverbindung der Formel

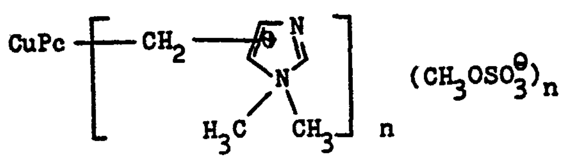

n̄ = 1,5

Die Verbindung löst sich in Wasser mit klarer türkisblauer Farbe.

Beispiel 131

In 250 Teile Schwefelsäuremonohydrat werden 23,7 Teile Anthrachinonbisthiazol der Formel IX gelöst. Dann werden nebeneinander 16,4 Teile 4-Methylimidazol und 8,3 Teile Paraformaldehyd eingetragen. Das Gemisch wird 20 Stunden bei 25 °C und 7 Stunden bei 50 °C gerührt. Die Reaktionslösung wird auf Eiswasser ausgetragen und mit 50 %iger Natronlauge auf pH 10 gestellt. Der Niederschlag wird abgesaugt, mit Wasser neutral und salzfrei gewaschen und bei 80 °C getrocknet.

Ausbeute : 34,8 Teile des Farbstoffs der Formel

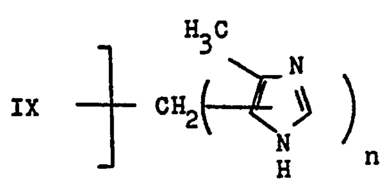

n̄ = 2

Analyse :
Atomverhältnis : S : N = 1 : 3
Die Lösungsfarbe in verdünnter Essigsäure ist gelb.

## Beispiel 132

In 220 Teile Schwefelsäuremonohydrat werden 22,8 Teile Isoviolanthron eingetragen und gelöst. Dann werden nebeneinander 20,5 Teile 4-Methylimidazol und 10,5 Teile Paraformaldehyd eingetragen. Das Gemisch wird eine Stunde bei 25 bis 30 °C und 5 Stunden bei 100 °C gerührt. Die Reaktionslösung wird auf 1 500 Teile Eiswasser ausgetragen und mit 50 %iger Natronlauge auf pH 10 gestellt. Der Niederschlag wird abgesaugt und mit Wasser neutral und salzfrei gewaschen.

Ausbeute : 42,3 Teile des Farbstoffs der Formel

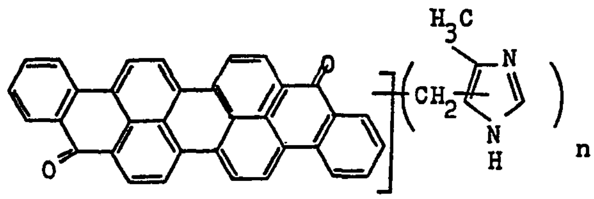

$\bar{n} = 3$

Analyse : $C_{49}H_{34}N_6O_2$ (738) ber. N 11,4
gef. n 11,1

Die essigsaure Lösung ist rotstichigblau. $\lambda_{max}$ 557 nm.

## Beispiel 133

In 280 Teile Schwefelsäuremonohydrat werden 22,2 Teile 4-Methylimidazol eingetragen und anschließend in kleinen Portionen 8,3 Teile Paraformaldehyd zugefügt. Das Gemisch wird 60 Stunden bei 25 °C gerührt, danach auf 2 000 Teile Eiswasser ausgetragen und mit etwa 420 Teilen 50 %iger Natronlauge auf pH 10 eingestellt. Der Niederschlag wird abgesaugt und mit Wasser neutral und salzfrei gewaschen.

Ausbeute : 31,7 Teile des Farbstoffs der Formel

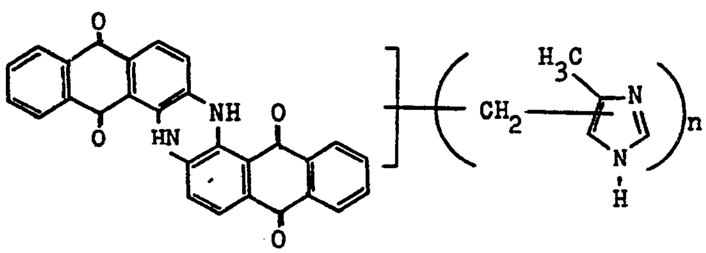

$\bar{n} = 1,1$

Analyse : $C_{33}H_{20}N_4O_4$ (536) ber. N 10,45
gef. N 10,7

Die Lösung in 25 %iger Essigsäure ist blau.
$\lambda_{max}$ 677 nm (0,040 g/l).

## Beispiel 134

In 690 Teile Schwefelsäuremonohydrat werden 86,1 Teile Kupferphthalocyanin gelöst und bei 20 bis 30 °C nebeneinander 46,5 Teile 4-Methylimidazol und 24,75 Teile Paraformaldehyd eingetragen. Das Gemisch wird 30 Minuten bei 30 bis 40 °C gerührt, dann auf 98 bis 100 °C erwärmt und 10 Stunden bei dieser Temperatur gerührt. Nach dem Abkühlen wird das Reaktionsgemisch auf Eiswasser ausgetragen und die Lösung mit Natronlauge auf pH 10 bis 11 gestellt. Die Fällung abfiltriert, neutral und salzfrei gewaschen und bei 100 °C getrocknet.

Ausbeute : 42,4 Teile des Farbstoffs der Formel

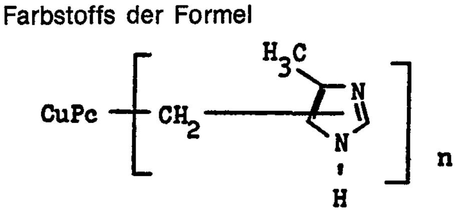

$\bar{n} = 3$

Atomverhältnis von Cu : N = 1 : 14
Die essigsaure Lösung ist türkisblau.
$\lambda_{max}$ 327 und 607 nm.

Beispiel 135

In 140 Teilen 96 %iger Schwefelsäure werden 8,6 Teile 4-Methylimidazol und 4,2 Teile Paraformaldehyd eingetragen und 30 Minuten bei 40 °C gerührt. Darauf werden bei 10 bis 20 °C 12 Teile 4,4'-Bis(6-methylbenzthiazolyl-2)azobenzol (hergestellt nach Helv. Chim. Acta 1944, Seite 27) zugefügt. Die Mischung wird in 30 Minuten auf 60 °C und 3 Stunden bei 60 °C gerührt. Die Lösung wird auf Eiswasser ausgetragen, unter Kühlen mit 25 %igem Ammoniak neutralisiert. Die Fällung wird abgesaugt, ausgewaschen und bei 70 °C getrocknet.

Ausbeute : 15,7 Teile des Farbstoffs der Formel

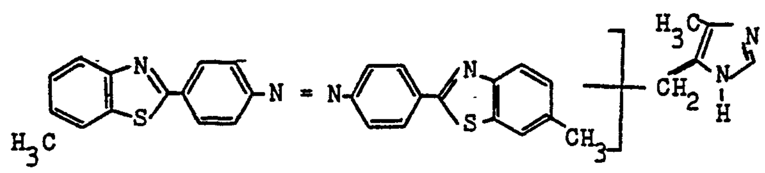

der sich in verdünnter Essigsäure mit gelber Farbe löst. $\lambda_{max}$ 237 und 380 nm.

Anwendungsbeispiel 1

50 g Altpapier (holzhaltig) werden in einem Liter Wasser (10° dH) bei Raumtemperatur zu einer Fasersuspension aufgeschlagen. Anschließend wird mit 1 Liter gleichem Wasser verdünnt. Der Suspension wird eine Mischung aus 2 g einer 10 %igen essigsauren Lösung des Farbstoffs aus Beispiel 64 und 10 ml Wasser zugesetzt. Das Gemisch wird 15 Minuten leicht gerührt und dann mit Wasser auf 0,5 % Feststoffgehalt verdünnt. Mit dieser Suspension werden auf Labor-Blattbildner der Firma Franck Papierblätter von 80 g/m² hergestellt und die feuchten Blätter 5 Minuten bei 100 °C getrocknet. Man erhält ein rot gefärbtes Schrenzpapier. Das Abwasser ist farblos. Die Ausblutechtheiten des gefärbten Papieres (DIN 53 991) sind sehr gut, ebenso die Lichtechtheit.

Gleich gute Ergebnisse werden erhalten, wenn das Altpapier durch a) eine Mischung aus 30 % Birkensulfatzellstoff und 70 % Kiefernsulfatzellstoff, durch b) Kiefernsulfitzellstoff oder c) Kiefernsulfatzellstoff ersetzt wird. Man erhält orangerote bis rote Papiere mit hervorragenden Echtheitseigenschaften.

Anwendungsbeispiel 2

15 kg Altpapier (holzhaltig), 25 kg gebleichter Holzschliff und 10 kg ungebleichter Sulfatzellstoff werden im Pulper zu einer 3 %igen wäßrigen Stoffsuspension aufgeschlagen. Die Stoffsuspension wird in einer Färbebütte auf 2 % verdünnt. Dieser Suspension werden dann — gerechnet auf trockene Gesamtfaser — nacheinander unter Rühren 0,5 % lösliche, oxidativ abgebaute Maisstärke, 5 % Kaolin und 1,25 kg einer 5 %igen essigsauren Lösung des Farbstoffs aus Beispiel 64 zugegeben. Nach 20 Minuten wird der Stoff in der Mischbütte mit 1 % (bezogen auf atro Faser) einer Harzleim-Dispersion versetzt. Die homogene Stoffsuspension wird auf der Papiermaschine kurz vor dem Stoffauflauf, mit Alaun auf pH 5 eingestellt.

Auf der Papiermaschine wird ein 80 g/m² schweres Tütenpapier maschinenglatt hergestellt, welches eine mittlere Rotnuance mit guten Ausblutechtheiten nach DIN 53 991 aufweist.

Anwendungsbeispiel 3

25 kg Katalogpapier (Ausschuß), 60 kg gebleichter Holzschliff (65° Schopper Riegler) und 15 kg ungebleichter Sulfitzellstoff werden im Pulper in 2 500 l Wasser aufgeschlagen. Der 4 %igen wäßrigen Stoffsuspension werden 0,4 % lösliche Stärke, 16 Kaolin und 2 % Talkum (berechnet auf trockne Faser) zugegeben. Anschließend wird die Stoffsuspension am Refiner auf 45° Schopper Riegler ausgemahlen. Der Stoffsuspension werden 12 kg einer 10 %igen, essigsauren Lösung des Farbstoffs aus Beispiel 64 zugesetzt, (=1 % trockener Rotfarbstoff bezogen atro Faser). Nach 15 Minuten Ziehzeit wird dem Stoff Harzleim-Dispersion (Menge : 0,6 % trocken, bezogen auf Faser) zugesetzt. Nach 10 Minuten wird der aus der Mischbütte abfließende Stoff kontinuierlich mit Wasser auf 0,8 % Stoffgehalt verdünnt und kontinuierlich mit Alaun ($Al_2(SO_4)_3 \cdot 18\ H_2O$) auf pH 4,5 gestellt (gemessen im Siebwasser) und in den Stoffauflauf gepumpt.

Man erhält gelbstichig rotes Katalogpapier (60 g/m²) mit guter Wasserechtheit.

Werden anstelle des Farbstoffs aus Beispiel 64 die Farbstoffe der Beispiel 65 bis 69 verwendet, dann erhält man rotorange- bis orange gefärbtes Papier mit guten Naßechtheiten.

Beispiel 136

75 Teile 2-Chlorethanol-(1) und 19 Teile des nach Beispiel 96 erhaltenen Farbstoffs werden eine Stunde bei 80 °C und 2 h bei 90/95 °C gerührt. Nach dem Abkühlen auf 20 °C wird der Farbstoff durch Zugeben von 200 Teilen Aceton gefällt, abgesaugt, mit Aceton gewaschen und bei 30 °C getrocknet.

Ausbeute : 22,3 Teile quartäre Ammoniumverbindung der Formel

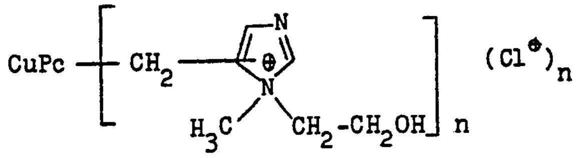

mit $\bar{n} = 1,5$.

Die Verbindung löst sich in Wasser mit klarer türkisblauer Farbe. $\lambda_{max}$ 325 und 607 nm. Auf papier erhält man Färbungen im gleichen Farbton ; das Abwasser ist ungefärbt.

**Ansprüche**

1. Imidazolylmethylengruppen enthaltende Farbstoffe der Formel

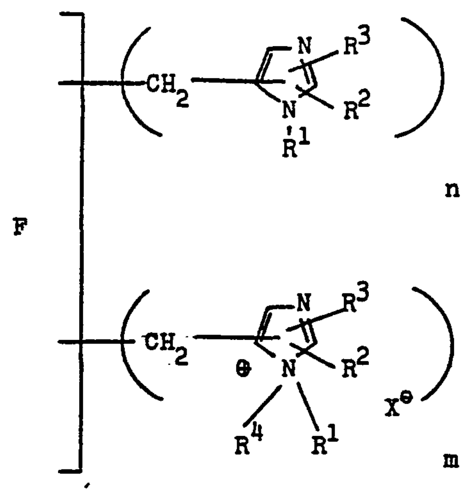

(I)

in der

$R^1$ Wasserstoff, $C_1$- bis $C_6$-Alkyl oder $C_2$- bis $C_6$-Alkenyl,

$R_2$ und $R^3$ unabhängig voneinander Wasserstoff, $C_1$- bis $C_5$-Alkyl oder $C_2$- bis $C_5$-Alkenyl,

$R^4$ $C_1$- bis $C_{12}$-Alkyl oder Hydroxy-$C_2$- bis $C_4$-alkyl,

$X^{\ominus}$ ein Äquivalent eines Anions,

F ein (m + n)-wertiger Rest eines Monoazofarbstoffs, eines Disazofarbstoffs, eines Polyazofarbstoffs, eines Chinophthalons, eines Bisdioxazins, einer Verbindung der 5,6-Arylo-2-pyronreihe, eines Naphtholactam-farbstoffs, eines Triphenylmethanfarbstoffs, eines Xanthenfarbstoffs, eines Phthalocyanins, eines Indigoids, eines mindestens eine Phenyl- oder Naphthylgruppe enthaltenden Anthrachinonfarbstoffs, eines höher anellierten Carbonylfarbstoffs, eines Chinacridons, eines Perylen-3,4,9,10-tetracarbonsäurediimids, eines Anthrapyrimidins, eines Pyrazoloanthrons, eines Diaminonaphthochinons, eines Naphthazerins oder eines Naphthalin-1,4,5,8-tetracarbonsäurediimids,

m 0 bis 5 und

n 0 bis 5 bedeuten, wobei $1 \leq (m + n) \leq 5$ ist.

2. Farbstoffe gemäß Anspruch 1, dadurch gekennzeichnet, daß $R^1$ und $R^2$ unabhängig voneinander Wasserstoff oder $C_1$- bis $C_4$-Alkyl, $R^3$ Wasserstoff, $R^4$ $C_1$- bis $C_4$-Alkyl oder Hydroxy-$C_2$- bis $C_4$-alkyl und (n + m) 1 bis 4 bedeuten.

3. Farbstoffe gemäß Anspruch 1, dadurch gekennzeichnet, daß $R^1$ und $R^2$ unabhängig voneinander Wasserstoff oder $C_1$- bis $C_4$-Alkyl, $R^3$ Wasserstoff, n 1 bis 4 und m 0 bedeuten.

4. Farbstoffe gemäß Anspruch 1, dadurch gekennzeichnet, daß $R^1$ und $R^3$ Wasserstoff, $R^2$ 4-Methyl, n = 1 bis 4 und m = 0 bedeuten.

5. Farbstoffe gemäß den Ansprüchen 1, 2, 3 oder 4, dadurch gekennzeichnet, daß F ein (n + m)-wertiger Rest ist, der sich ableitet

a) von Kupplungsprodukten von aromatischen carbocyclischen Diaminen auf β-Naphthol, dessen Derivate oder Acetoacetaniliden,

b) von Kupplungsprodukten von aromatischen carbocyclischen Diaminen auf Pyrazolon-5-Verbindungen,

c) von Kupplungsprodukten von gegebenenfalls substituierten Aminoazobenzol auf Pyrazolon-5-verbindungen,

d) von Farbstoffen der Formel

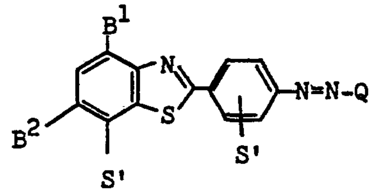

in der

Q einen Rest der Formeln

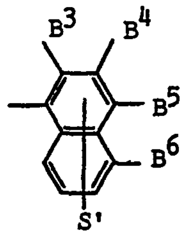

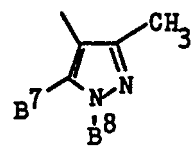,

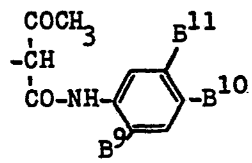

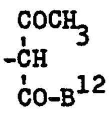

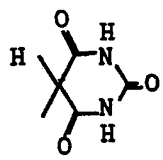 oder 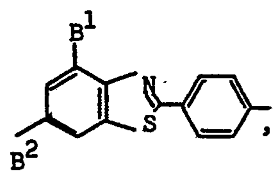,

oder

$B^1$ Wasserstoff oder Methyl
$B^2$ Wasserstoff, Methyl oder Ethyl,
S' eine Sulfonsäuregruppe oder Wasserstoff,
$B^3$ Wasserstoff, Hydroxy, Amino, 2-Hydroxyethylamino, Methylamino oder Phenylamino,
$B^4$ Wasserstoff, Acetyl oder N-Phenylcarbamoyl,
$B^5$ Wasserstoff, Hydroxy, Methyl, Methoxy, Chlor, Brom, 2-Hydroxyethylamino oder Dimethylamino, wobei $B^3$ oder $B^5$ Hydroxy sein muß,
$B^6$ Wasserstoff, Methyl oder Methoxy,
$B^7$ Hydroxy oder Amino,
$B^8$ Phenyl oder 4-Methoxyphenyl,
$B^9$ Wasserstoff, Methyl oder Methoxy,
$B^{10}$ Wasserstoff oder Chlor,
$B^{11}$ Wasserstoff oder Methoxy und
$B^{12}$ Methoxy, Butoxy, Amino, Methylamino, Phenoxy, 4-Methylphenoxy oder 3-Methyl-4-methoxyphenoxy bedeuten ;

e) von Farbstoffen der Formel

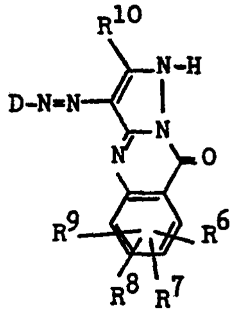

in der D ein gegebenenfalls durch Chlor, Nitro, Methoxy, Methyl, Phenylazo oder Tolylazo substituiertes Phenyl ist und wobei der Phenylrest einen oder zwei Substituenten trägt und die Substituenten — mit Ausnahme der Nitro-, Phenylazo- und Tolylazogruppe — gleich oder verschieden sein können,

$R^6$ Wasserstoff, Chlor, Brom, Nitro, Methyl, Trifluormethyl, Carboalkoxy, gegebenenfalls substituiertes Carbamoyl oder Sulfamoyl, Sulfonsäurearylester, Cyan, Alkanoylamino oder Phenyl,

$R^7$ Wasserstoff Chlor oder Brom,

$R^8$ und $R^9$ unabhängig voneinander Wasserstoff, Chlor, Brom oder zusammen einen annellierten Ring und

$R^{10}$ Methyl oder gegebenenfalls durch Chlor oder Methoxy substituiertes Phenyl bedeuten,

f) vom 5,6-Benzochinophthalon,

g) vom 7-Dialkylamino-3-benzimidazolyl-(2)-cumarin,

h) von Kondensationsprodukten von Naphtholactamen mit Barbitursäure oder N-substituierter Barbitursäure,

i) von Triphenylmethan- oder Xanthenfarbstoffen,

k) von Phthalocyaninen oder

l) von Violanthronen, Isoviolanthronen, Pyranthronen, Indanthronen, Naphthoylenbenzimidazolen oder von Anthrachinonbisacridonen.

6. Farbstoffe gemäß Anspruch 3 oder 4, dadurch gekennzeichnet, daß F ein (m + n)-wertiger Rest ist, der sich von Farbstoffen der Formel

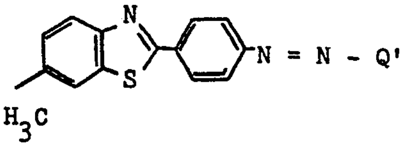

ableitet, in der Q' für einen Rest der Barbitursäure, des N-Methyl-N-benzylanilins oder des 4(6'-Methylbenzthiazolyl-2')-phenyls steht.

7. Farbstoffe gemäß Anspruch 3 oder 4, dadurch gekennzeichnet, daß F sich von Farbstoffen der Formel

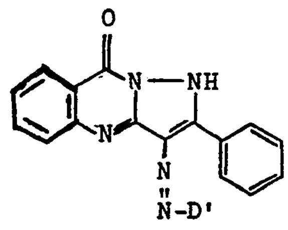

ableitet, in der D' der Rest eines durch Phenylazo oder Tolylazo substituierten Phenylrests ist, der gegebenenfalls durch Chlor, Methoxy, Methyl noch weiter substituiert ist.

8. Farbstoffe gemäß Anspruch 3 oder 4, dadurch gekennzeichnet, daß F ein Rest ist, der sich vom Benzochinophthalon (2-[1,3-Dioxo-Hydrindyl-(2)]-5,6-benzochinolin oder von Kondensationsprodukten von Naphtholactamen mit Barbitursäuren ableitet.

9. Farbstoffe gemäß Anspruch 3 oder 4, dadurch gekennzeichnet, daß F ein (m + n)-wertiger Rest ist, der sich von Kupferphthalocyanin ableitet.

10. Verwendung der Farbstoffe gemäß den Ansprüchen 1 bis 9 zum Färben von Cellulosefasern enthaltendem Material.

**Claims**

1. A dye, containing imidazolylmethylene groups, of the formula

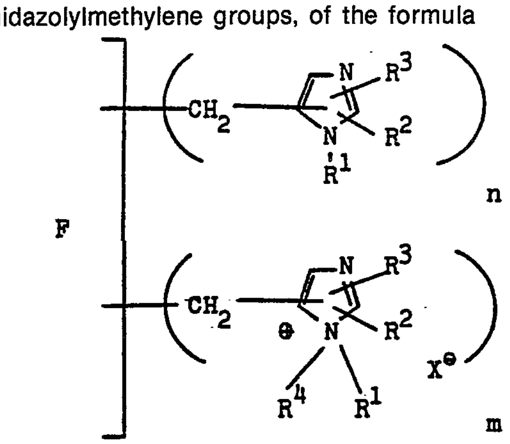

(I)

where

$R^1$ is hydrogen, $C_1$-$C_6$-alkyl or $C_2$-$C_6$-alkenyl,

$R^2$ and $R^3$ independently of one another are hydrogen, $C_1$-$C_5$-alkyl or $C_2$-$C_5$-alkenyl,

$R^4$ is $C_1$-$C_{12}$-alkyl or hydroxy-$C_2$-$C_4$-alkyl,

$X^{\ominus}$ is one equivalent of an anion,

F is an (m + n)-valent radical of a monoazo dye, a disazo dye, a polyazo dye, a quinophthalone, a bisdioxazine, a compound of the 5,6-arylo-2-pyrone series, a naphtholactam dye, a triphenylmethane dye, a xanthene dye, a phthalocyanine, an indigoid, an anthraquinone dye containing one or more phenyl or naphthyl groups, a more highly fused carbonyl-containing dye, a quinacridone, a perylene-3,4,9,10-tetracarboxylic acid diimide, an anthrapyrimidine, a pyrazoloanthrone, a diaminonaphthoquinone, a naphthazarine or a naphthalene-1,4,5,8-tetracarboxylic acid diimide,

m is from 0 to 5 and

n is from 0 to 5, with $1 \leq (m + n) \leq 5$.

2. A dye as claimed in claim 1, wherein $R^1$ and $R^2$ independently of one another are hydrogen or $C_1$-$C_4$-alkyl, $R^3$ is hydrogen and $R^4$ is $C_1$-$C_4$-alkyl or hydroxy-$C_2$-$C_4$-alkyl, and (n + m) is from 1 to 4.

3. A dye as claimed in claim 1, wherein $R^1$ and $R^2$ independently of one another are hydrogen or $C_1$-$C_4$-alkyl, $R^3$ is hydrogen, n is from 1 to 4 and m is 0.

4. A dye as claimed in claim 1, wherein $R^1$ and $R^3$ are hydrogen, $R^2$ is 4-methyl, n is from 1 to 4 and m is 0.

5. A dye as claimed in claim 1, 2, 3 or 4, wherein F is an (m + n)-valent radical which is derived

a) from a coupling product of an aromatic carbocyclic diamine with β-naphthol, with a β-naphthol derivative or with an acetoacetanilide,

b) from a coupling product of an aromatic carbocyclic diamine with a pyrazol-5-one compound,

c) from a coupling product of an unsubstituted or substituted aminoazobenzene with a pyrazol-5-one compound,

d) from a dye of the formula

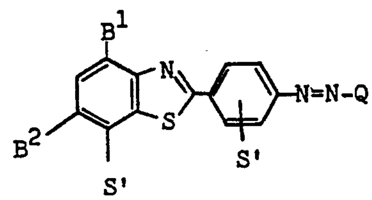

where Q is a radical of the formula

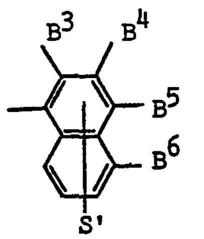

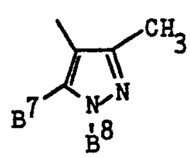

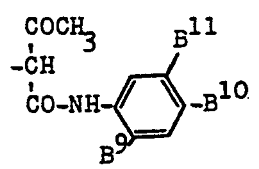

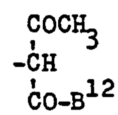

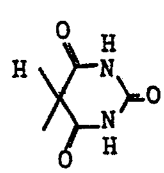 or 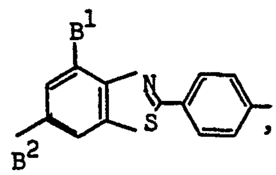,

$B^1$ is hydrogen or methyl,

$B^2$ is hydrogen, methyl or ethyl, S' is a sulfonic acid group or hydrogen,

$B^3$ is hydrogen, hydroxyl, amino, 2-hydroxyethylamino, methylamino or phenylamino,

$B^4$ is hydrogen, acetyl or N-phenylcarbamyl,

$B^5$ is hydrogen, hydroxyl, methyl, methoxy, chlorine, bromine, 2-hydroxyethylamino or dimethylamino, but either $B^3$ or $B^5$ must be hydroxyl,

$B^6$ is hydrogen, methyl or methoxy,
$B^7$ is hydroxyl or amino,
$B^8$ is phenyl or 4-methoxyphenyl,
$B^9$ is hydrogen, methyl or methoxy,
$B^{10}$ is hydrogen or chlorine,
$B^{11}$ is hydrogen or methoxy and
$B^{12}$ is methoxy, butoxy, amino, methylamino, phenoxy, 4-methylphenoxy or 3-methyl-4-methoxyphenoxy,

e) from a dye of the formula

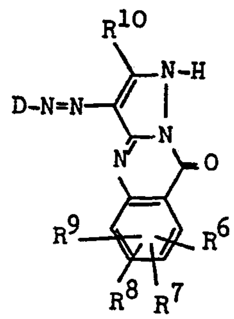

where D is phenyl which is unsubstituted or substituted by one or two substituents chosen from chlorine, nitro, methoxy, methyl, phenylazo or tolylazo, the substituents (where two are present) being identical or different except in the case of the phenylazo, tolylazo and nitro groups,

$R^6$ is hydrogen, chlorine, bromine, nitro, methyl, trifluoromethyl, carboalkoxy, unsubstituted or substituted carbamyl or sulfamyl, a sulfonic acid aryl ester group, cyano, alkanoylamino or phenyl,

$R^7$ is hydrogen, chlorine or bromine,

$R^8$ and $R^9$ independently of one another are hydrogen, chlorine or bromine or together are a fused ring and

$R^{10}$ is methyl, phenyl or chlorine- or methoxy-substituted phenyl,

f) from 5,6-benzoquinophthalone,

g) from 7-dialkylamino-3-benzimidazol-2-yl-coumarin,

h) from a condensate of a naphtholactam with barbituric acid or N-substituted barbituric acid,

i) from a triphenylmethane dye or xanthene dye,

k) from a phthalocyanine or

l) from violanthrone, isoviolanthrone, pyranthrone, indanthrone, naphthoylenebenzimidazole or anthraquinonebisacridone.

6. A dye as claimed in claim 3 or 4, wherein F is an (m + n)-valent radical which is derived from a dye of the formula

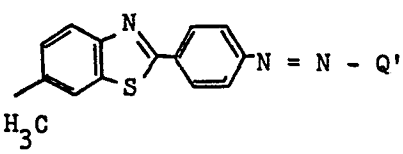

where Q' is a radical of barbituric acid, N-methyl-N-benzyl-aniline or 4(6'-methylbenzothiazol-2'-yl)-phenyl.

7. A dye as claimed in claim 3 or 4, wherein F is derived from a dye of the formula

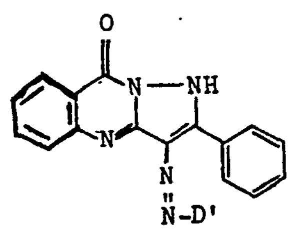

where D' is the radical of a phenyl which is substituted by phenylazo or tolylazo, and may be further substituted by chlorine, methoxy or methyl.

8. A dye as claimed in claim 3 or 4, wherein F is a radical which is derived from benzoquinophthalone (2-[1,3-dioxohydrondyl-(2)]-5,6-benzoquinoline) or a condensate of a naphtholactam with a barbituric acid.

9. A dye as claimed in claim 3 or 4, wherein F is an (m + n)-valent radical which is derived from copper phthalocyanine.

10. The use of a dye as claimed in any of claims 1 to 9 for dyeing material containing cellulosic fibers.

**Revendications**

1. Colorants contenant des groupes imidazolylméthylène de formule

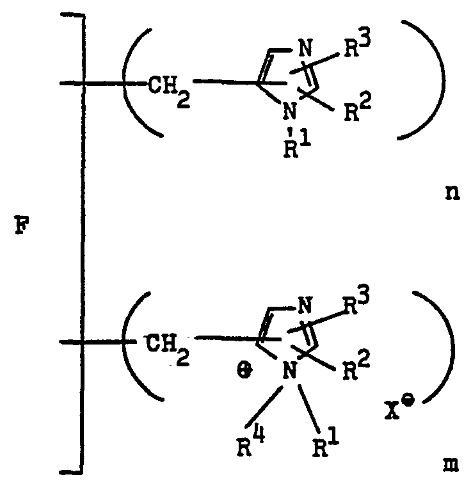

(I)

dans laquelle

$R^1$ représente un hydrogène, un alcoyle en $C_1$ à $C_6$ ou un alcényle en $C_2$ à $C_6$,

$R^2$ et $R^3$ représentent, indépendamment l'un de l'autre, un hydrogène, un alcoyle en $C_1$ à $C_5$ ou un alcényle en $C_2$ à $C_5$,

$R^4$ représente un alcoyle en $C_1$ à $C_{12}$ ou un hydroxyalcoyle en $C_2$ à $C_4$,

$X^{\ominus}$ est un équivalent d'un anion,

F est un radical (m + n)-valent d'un colorant monoazoïque, d'un colorant disazoïque, d'un colorant polyazoïque, d'une quinophtalone, d'une bis-dioxazine, d'un composé de la série 5,6-arylo-2-pyronique, d'un colorant naphtolactamique, d'un colorant triphénylméthanique, d'un colorant xanthénique, d'une phtalocyanine, d'un indigoïde, d'un colorant anthraquinonique contenant au moins un groupe phényle ou naphtyle, d'un colorant carbonylique à noyaux condensés supérieur, d'une quinacridone, d'un diimide d'acide pérylène-3,4,9,10-tétracarboxylique, d'une anthrapyrimidine, d'une pyrazoloanthrone, d'une diaminophtoquinone, d'une naphtazérine ou d'un diimide d'acide naphtalène-1,4,5,8-tétracarboxylique,

m est un nombre de 0 à 5 et

n est un nombre de 0 à 5, avec $1 \leq (m + n) \leq 5$.

2. Colorants selon la revendication 1, caractérisés en ce que $R^1$ et $R^2$ représentent, indépendamment l'un de l'autre, un hydrogène ou un alcoyle en $C_4$ à $C_4$, $R^3$ représente un hydrogène, $R^4$ un alcoyle en $C_1$ à $C_4$ ou un hydroxyalcoyle en $C_2$ à $C_4$ et (n + m) est compris entre 1 et 4.

3. Colorants selon la revendication 1, caractérisés en ce que $R^1$ et $R^2$ représentent, indépendamment l'un de l'autre, un hydrogène ou un alcoyle en $C_1$ à $C_4$, $R^3$ représente un hydrogène, n est compris entre 1 et 4 en m est égal à 0.

4. Colorants selon la revendication 1, caractérisés en ce que $R^1$ et $R^3$ sont chacun un hydrogène, $R^2$ un 4-méthyle, n = 1 à 4 et m = 0.

5. Colorants selon l'une quelconque des revendications 1 à 4, caractérisés en ce que F est un radical (n + m)-valent qui dérive :

a) De produits de copulation de diamines carbocycliques aromatiques sur le β-naphtol, des dérivés de celui-ci ou des acétoacétanilides,

b) de produits de copulation de diamines carbocycliques aromatiques sur des composés pyrazolone-5,

c) de produits de copulation d'aminoazobenzène éventuellement substitué sur des composés pyrazolone-5,

d) de colorants de formule

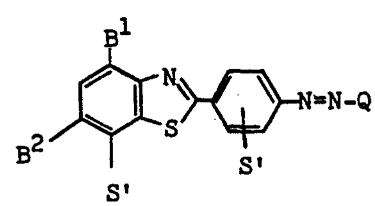

dans laquelle

Q est un radical de formule

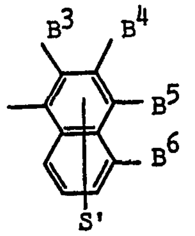

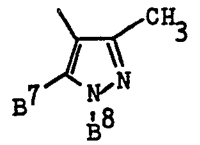

,

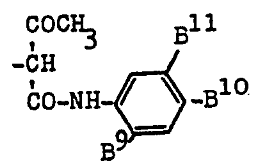

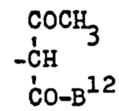

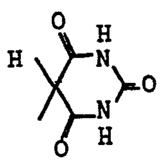

ou

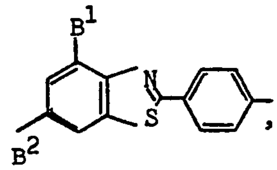

,

$B^1$ est un hydrogène ou un méthyle,

$B^2$ est un hydrogène, un méthyle ou un éthyle,

S′ est un groupe acide sulfonique ou un hydrogène,

$B^3$ est un hydrogène, un hydroxy, un amino, un 2-hydroxyéthylamino, un méthylamino ou un phénylamino,

$B^4$ est un hydrogène, un acétyle ou un N-phénylcarbamoyle,

$B^5$ est un hydrogène, un hydroxy, un méthyle, un méthoxy, un chlore, un brome, un 2-hydroxyéthylamino ou un diméthylamino, $B^3$ ou $B^5$ devant être obligatoirement un hydroxy,

$B^6$ est un hydrogène, un méthyle ou un méthoxy,

$B^7$ est un hydroxy ou un amino,

$B^8$ est un phényle ou un 4-méthoxyphényle,

$B^9$ est un hydrogène, un méthyle ou un méthoxy,

$B^{10}$ est un hydrogène ou un chlore,

$B^{11}$ est un hydrogène ou un méthoxy et

$B^{12}$ est un méthoxy, un butoxy, un amino, un méthylamino, un phénoxy, un 4-méthylphénoxy ou un 3-méthyl-4-méthoxyphénoxy,

e) de colorants de formule

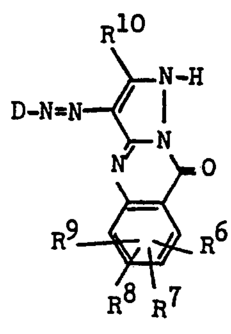

dans laquelle D est un phényle éventuellement substitué par un chlore, un nitro, un méthoxy, un méthyle, un phénylazo ou un tolylazo, le radical phényle portant un ou deux substituants et les substituants — à l'exception des groupes nitro, phénylazo et tolylazo — pouvant être semblables ou différents,

$R^6$ est un hydrogène, un chlore, un brome, un nitro, un méthyle, un trifluorométhyle, un carboalcoxy, un carbamoyle ou sulfamoyle éventuellement substitué, un ester arylique d'acide sulfonique, un cyano, un alcanoylamino ou un phényle,

$R^7$ est un hydrogène, un chlore ou un brome,

$R^8$ et $R^9$ représentent, indépendamment l'un de l'autre, un hydrogène, un chlore, un brome ou constituent ensemble un noyau condensé et

$R^{10}$ est un méthyle ou un phényle éventuellement substitué par un chlore ou un méthoxy,

f) de la 5,6-benzoquinophtalone,

g) d'une 7-dialcoylamino-3-benzimidazolyl-(2)-coumarine,

h) de produits de condensation de naphtolactames avec l'acide barbiturique ou des acides barbituriques N-substitués,

i) de colorants triphénylméthaniques ou xanthéniques,

k) de phtalocyanines ou

l) de violanthrones, isoviolanthrones, pyranthrones, indanthrones, naphtoylène-benzimidazoles ou d'anthraquinone-bis-acridones.

6. Colorants selon la revendication 3 ou 4, caractérisés en ce que F est un radical (m + n)-valent qui est dérivé de colorants de formule

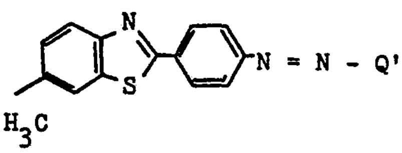

dans laquelle Q' est mis pour un radical de l'acide barbiturique, de la N-méthyl-N-benzylaniline ou du 4-(6'-méthylbenzothiazolyl-2')-phényle.

7. Colorants selon la revendication 3 ou 4, caractérisé en ce que F dérive de colorants de formule

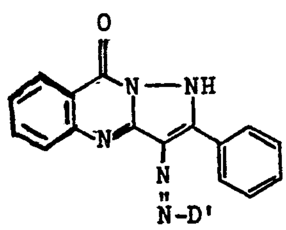

dans laquelle D' est un radical phényle substitué par un groupe phénylazo ou tolylazo et éventuellement substitué en outre par un chlore, un méthoxy, un méthyle.

8. Colorants selon la revendication 3 ou 4, caractérisés en ce que F est un radical qui dérive de la benzoquinophthalone, de la 2-[1,3-dioxo-hydrindyl-(2)]-5,6-benzoquinoléine ou de produits de condensation de naphtolactames avec des acides barbituriques.

9. Colorants selon la revendication 3 ou 4, caractérisés en ce que F est un radical (m + n)-valent qui dérive de la phtalocyanine de cuivre.

10. Utilisation de colorants selon l'une quelconque des revendications 1 à 9 pour la teinture de matières contenant des fibres de cellulose.